# EUROPÄISCHE PATENTSCHRIFT

(11) **EP 2 313 285 B1**
(45) Veröffentlichungstag und Bekanntmachung des Hinweises auf die Patenterteilung: **14.03.2012**
(21) Anmeldenummer: 09777176.0
(22) Anmeldetag: 14.07.2009
(51) Int. Cl.: B60H 1/34

(54) **LUFTAUSSTRÖMER MIT DRALLSTRÖMUNG UND GERICHTETER STRÖMUNG**
AIR DISCHARGER WITH VORTEX FLOW AND DIRECTED FLOW
SOUFFLERIE D AIR AVEC ÉCOULEMENT GIRATOIRE ET ÉCOULEMENT DIRIGÉ

(30) Priorität: 16.07.2008 DE 102008033339
(43) Veröffentlichungstag der Anmeldung: 27.04.2011
(73) Patentinhaber: Behr GmbH & Co. KG, 70469 Stuttgart (DE)
(72) Erfinder: BENAMIRA, Salah, 70180 Stuttgart (DE)
(74) Vertreter: Grauel, Andreas
(86) Internationale Anmeldenummer: PCT/EP2009/005106
(87) Internationale Veröffentlichungsnummer: WO 2010/006760

(56) Entgegenhaltungen:
- EP-A- 1 800 918
- EP-A- 1 972 476
- EP-B- 0 936 091
- WO-A-2008/107070
- DE-A1- 3 736 448
- DE-A1- 10 036 776
- DE-A1-102005 036 159
- DE-U1- 29 914 962

## Beschreibung

Die Erfindung betrifft einen Luftausströmer, insbesondere für eine Klimatisierung eines Fahrzeuginnenraumes.

Im Stand der Technik sind Luftausströmer in diversen Varianten bekannt. Sie dienen dazu, im Fahrzeuginnenraum schnell ein angenehmes Klima zu schaffen. Es ist ihre Aufgabe, zu diesem Zweck genügend Luft in den Innenraum zu befördern.

So beschreibt die DE 100 36 776 A1 eine Einrichtung zur Klimatisierung eines Innenraumes, insbesondere eine Fahrzeug-Klimatisierungseinrichtung, mit einem Klimagerät mit einer Klimaluft-Führung, sowie mit einem Luftheizgerät mit einer Heizluft-Führung. Die Klimaluft-Führung und die Heizluft-Führung sind mit dem Innenraum verbunden und über ein Mündungsstück in Form einer Doppeldüse zusammengeführt, welche ein Innenrohr und ein konzentrisches Außenrohr aufweist. Dabei kann im Ringraum zwischen dem Innenrohr und Außenrohr eine Drallströmungs-Leiteinrichtung vorgesehen sein, die vorzugsweise einstellbar ist. Bei dieser Einrichtung handelt es sich um einen zweikanaligen Luftausströmer mit einem inneren Luftführungskanal für einen konzentrierten Luftstrahl (auch Spotbereich genannt) und einem äußeren Luftführungskanal für eine Drallströmung (auch Diffusbereich genannt). In vollständig geöffneter Stellung hat der Diffusbereich einen hohen Druckabfall und eine starke Geräuschentwicklung. Die Effizienz des Spotbereichs wird dadurch reduziert.

Die DE 299 14 962 U1 beschreibt einen einkanaligen Luftausströmer, insbesondere für eine Kraftfahrzeuglüftung, mit einem Drallgeber, der mehrere Leitschaufeln hat, die jeweils um eine Schwenkachse verschwenkbar sind. Die Schwenkachsen sind etwa radial um eine gemeinsame Zentralachse angeordnet, wobei eine Drehbewegung der Zentralachse als Schwenkbewegung auf die Schwenkachsen der Leitschaufeln übertragbar ist. Die den Leitschaufeln zugeordneten Schwenkachsen sind jeweils mit einem Reib-oder Zahnrad drehfest verbunden, welche mit einem zentralen Reib- oder Zahnrad der Zentralachse in Antriebsverbindung stehen. Die Zentralachse trägt an ihrem abströmseitigen Achsende eine manuell betätigbare Drehhandhabe. Bei diesem Luftausströmer kann aufgrund der geringen Tiefe und geringen Ablenkungswirkung des Drallgebers nur eine Strömung mit schwachem Drall erzeugt werden.

Aus der EP 0 936 091 B1 ist ein Luftausströmer bekannt, bei welchem eine Leitrampe in Spiral- oder Helixform vorgeschlagen wird. Diese bewirkt eine Strömung mit starkem Drall und damit eine größere Verteilung des in ihr geführten Luftstroms in Art eines Diffusbereiches. Durch die konstante Drallströmung im Diffusbereich dieses Luftausströmers ist jedoch eine Anpassung der Klimatisierungswirkung an jeweilige Umgebungsbedingungen nicht möglich.

Aus der DE 10 2005 036 159 A1 ist eine weitere Luftstromsteuereinheit bekant, welche mehrere bewegliche Luftleitelemente zur Erzeugung einer konzentrischen Luftströmung und wenigstens einer drallartigen Strahlaufspreizung aufweist, wobei die wenigstens eine drallartige Luftströmung stufenlos eingestellt werden kann.

Der Erfindung liegt die Aufgabe zugrunde, einen Luftausströmer der eingangs genannten Art anzugeben, welcher bei einfachem Aufbau eine Anpassung einer Klimatisierungswirkung erlaubt, wobei ein breiter Variationsbereich der Anpassung möglich sein soll.

Die Aufgabe wird erfindungsgemäß gelöst durch einen Luftausströmer zum Ausströmen eines Luftstroms, insbesondere in einen Fahrzeuginnenraum, mit mindestens einem Luftführungskanal und mindestens einem darin angeordneten Luftleitelement in der Art eines Schaufelkranzes mit mindestens einer Schaufel, wobei jede der Schaufeln aus mindestens zwei axial hintereinander angeordneten Segmenten gebildet ist, die zwischen einer einen Modus "Diffus" bewirkenden Stellung und einer einen Modus "Gesamtluft" bewirkenden Stellung mit einem axial variabel einstellbaren Strömungsquerschnitt des Luftführungskanals zumindest relativ zueinander angular verstellbar sind. Durch einen derartig axial variabel einstellbaren Strömungsquerschnitt ist eine mehrfunktionale, insbesondere bi-funktionale Düse mit dem Modus "Diffus" mit einer diffusen Strömung oder Drallströmung und dem Modus "Gesamtluft" mit einer weitgehend konventionellen, insbesondere gleich gerichteten Strömung (auch Spotströmung genannt) ermöglicht.

Bevorzugt sind für das Luftleitelement in der Art eines Schaufelkranzes 1 bis 20, besonders bevorzugt 3 bis 7, insbesondere 5 Schaufeln vorgesehen.

In einer möglichen Ausführungsform sind die Segmente zwischen der den Modus "Diffus" bewirkenden Stellung, in der sie den Strömungsquerschnitt bei maximaler Verdrallung des Luftstroms maximal verringern und der den Modus "Gesamtluft" bewirkenden Stellung, in der sie den Strömungsquerschnitt bei minimaler Verdrallung des Luftstroms minimal verringern, zumindest relativ zueinander angular verstellbar. Dabei sind die Segmente der Schaufeln in der Stellung mit dem minimal verringerten Strömungsquerschnitt in axialer Ausrichtung des Luftausströmers weitgehend identisch übereinander angeordnet, so dass sich strömungsausgangsseitig eine weitgehend gerichtete Strömung ergibt.

In der anderen Stellung mit dem maximal verringerten Querschnitt, sind die Segmente jeweils einer Schaufel derart zueinander angular verstellbar, dass sich eine fächerartige Luftleitfläche in Strömungsrichtung bildet. Mittels der fächerartigen Luftleitfläche wird die Luftströmung in Querrichtung zur Kanallängsachse umgelenkt und somit verdrallt. Solange die verdrallte Luftströmung den Luftführungskanal durchfließt, wirken die Kanalwände entgegen der Zentrifugalkraft der verdrallten Luftströmung. Am Luftströmerausgang platzt die Luftströmung in radialer Richtung auf und strömt diffus in den Fahrzeuginnenraum. Somit stellt sich strömungsausgangsseitig am Luftausströmer eine Drall- oder Turbulenzströmung ein. Die angular verstellten Segmente der Schaufel können alternativ auch eine flügelartige oder helixförmige oder spiralförmige oder wendelförmige Luftleitfläche bilden. Die Segmente der jeweiligen Schaufel sind darüber hinaus zwischen den genannten Stellungen (auch als Endstellungen oder Anschlagstellungen bezeichnet) in eine beliebige Zwischenposition stellbar. Vorzugsweise ist der Schaufelkranz kurz vor dem Luftströmerausgang angeordnet. Bedingt durch den Schaufelkranz wird die Luftströmung nur über einen kurzen Weg verdrallt, wodurch die Luftströmung vorher keine großen Umlenkungen erfährt und dadurch weniger Druckverlust aufweist. Durch die Nutzung eines größeren Querschnitts und die Verdrallung der Luftströmung auf kürzerem Wege ergeben sich zudem geringere benetzte Flächen und geringere Strömungsgeschwindigkeiten. Daraus resultieren wiederum geringere Druckverluste und ein besseres akustisches Verhalten.

Zweckmäßigerweise sind die Segmente konzentrisch um die Längsachse des Luftausströmers gelagert. Insbesondere sind die Segmente zentriert um den Umfang eines inneren Kanals oder eines geschlossenen Zylinders angeordnet. Dabei kann das Luftleitelement aus einer einzelnen, mehrere Segmente umfassenden helixförmigen Schaufel gebildet sein. Alternativ kann das Luftleitelement aus mehreren konzentrisch um die Längsachse des Luftausströmers angeordneten Schaufeln und deren fächerartig oder helixförmig variabel einstellbaren Segmenten gebildet sein. In einer weiteren alternativen Ausführungsform kann durch mehrere in Längsausdehnung des Luftausströmers nacheinander angeordnete Schaufelkränze eine Mehrfach-Helix gebildet werden. Im Detail wird zum Erzeugen einer einstellbaren Drall-oder Diffusströmung das Luftleitelement, d.h. insbesondere die Schaufeln des oder der Schaufelkränze entsprechend verstellt, so dass mindestens eine Helix gebildet ist. Im Sinne der Erfindung kommt als Helix für den Schaufelkranz jede sich rotierend in die Tiefe des Raumes des Luftausströmers fortsetzende Struktur in Betracht. Eine solche Struktur kann insbesondere fächerartig, spiralförmig oder als schraubenförmige Wendel ausgebildet sein.

Es ist möglich, den Luftausströmer mit einer Angularstaffelungspositionierungseinrichtung zu versehen, welche bei zumindest einem Teil der Stellungen des Luftleitelements eine definierte angulare Staffelung der einzelnen, axial hintereinander angeordneten Segmente bewirkt. Dadurch ist es auf besonders einfache Weise möglich, bei sämtlichen der vorgesehenen Segmente eine definierte angulare Drehstellung zueinander zu bewirken, bzw. einen definierten Bereich angularer Drehstellungen zueinander zu bewirken. So ist es beispielsweise möglich, dass lediglich eines der Segmente durch einen externen Antrieb angetrieben wird. Die verbleibenden Segmente können dagegen durch die Angularstaffelungspositionierungseinrichtung angetrieben werden. Weiterhin ist es mit dem vorgeschlagenen Aufbau möglich, dass einzelne Segmente in unterschiedlichen Stellungen längs einer definierten Kurve zueinander stehen. Diese Stellung der Segmente relativ zueinander kann insbesondere so gewählt werden, dass sich eine effektive Schaufelfläche ergibt, welche beispielsweise ein für den Modus "Gesamtluft" bzw. den Modus "Diffus" besonders geeignete Stellung ergibt. Insbesondere ist es auch möglich, dass sich in den beiden genannten Endpositionen, gegebenenfalls auch in den Zwischenpositionen eine Schaufeloberfläche ergibt, welche der durch den Luftausströmer hindurch strömenden Luft einen möglichst geringen Luftwiderstand entgegen bringt. Die Angularstaffelungspositionierungseinrichtung kann beispielsweise unter Verwendung eines fest mit den Segmenten verbundenen, elastischen Elements, oder mit Hilfe eines mit einer Art Führungsnut versehenen Elements realisiert werden. Insbesondere ist eine Ausführung in Form eines, bzw. mehrerer Anschlagelemente möglich, die einen definierten, zulässigen Winkelbereich erlauben.

Besonders vorteilhaft kann es sein, wenn die einzelnen, axial hintereinander angeordneten Segmente zumindest einer Schaufel längs einer nicht-linearen Kurve angeordnet sind, insbesondere längs einer bogenförmig gekrümmten Linie, bevorzugt einer Spline-Linie. Gerade eine nicht-lineare Ausbildung der Schaufel kann für den Modus "Diffus" (bzw. für Zwischenstellungen, bei denen eine teilweise "diffuse" Luftausströmung erfolgt) besonders vorteilhaft sein. Durch eine derartige nicht-lineare Kurve kann beispielsweise eine "sanfte" und kontinuierlich ansteigende Ablenkung der das Luftleitelement des Luftausströmers hindurchströmenden Luft bewirkt werden. Dadurch kann eine unerwünschte Wirbelwirkung weitgehend reduziert werden, sodass der Druckabfall der hindurch strömenden Luft verringert werden kann. Insbesondere kann die nicht-lineare Kurve progressiv ansteigend gewählt werden. Besonders vorteilhafte Kurvenformen können eine bogenförmig gekrümmte Linie (insbesondere eine kreisbogenförmig gekrümmte Linie) oder eine Spline-Linie sein.

Besonders günstige Strömungsverhältnisse können sich ergeben, wenn der Eintrittswinkel zumindest einer Schaufel zumindest zeitweise zwischen 30° und 150°, bevorzugt zwischen 70 ° und 110°, besonders bevorzugt zwischen 85 ° und 95° liegt und/oder der Austrittswinkel des Luftstroms zumindest zweitweise zwischen 0° und 90°, vorzugsweise zwischen 10° und 70°, besonders bevorzugt zwischen 20° und 40° liegt. Die jeweils angegebene Winkelangabe bezieht sich dabei auf den Winkel zwischen dem jeweils lokalen Anstellwinkel der Schaufel (Schaufelmittelpunktslinie, gemittelte Schaufelmittelpunktslinie, Schaufeloberfläche und/oder gemittelte Schaufeloberfläche) und einer parallel zu den Segmenten liegenden Ebene (d. h. einer Ebene, welche normal auf der unbeeinflussten Lufteinströmungsrichtung steht). Versuche haben ergeben, dass die genannten Werte ein besonders günstiges Strömungsverhalten ergeben. Die genannten Werte gelten insbesondere für den Modus "diffus", gegebenenfalls aber auch für eine Zwischenstellung zwischen dem Modus "Diffus" und dem Modus "Gesamtluft".

Vorteilhaft kann es auch sein, wenn der mittlere Staffelungswinkel zwischen zwei axial hintereinander angeordneten Segmenten zwischen 0° und 90°, vorzugsweise zwischen 40° und 80°, besonders bevorzugt zwischen 50° und 70° beträgt. Auch hier gelten die genannten Werte insbesondere für die Stellung der Segmente im Modus "Diffus" und gegebenenfalls auch für Zwischenstellungen zwischen dem Modus "Diffus" und dem Modus "Gesamtluft". Mit den genannten Werten des mittleren Staffelungswinkels kann sich ebenfalls eine für eine diffuse Luftausströmung besonders geeignete Schaufelkontur (bezüglich der Schaufelmittellinie, der gemittelten Schaufellinie, der Schaufeloberfläche und/oder der gemittelten Schaufeloberfläche), welche durch die Anordnung der einzelnen Segmente resultiert, bewirkt werden. Es kann sich somit ein besonders effektiver, diffuser Luftausströmer mit besonders niedrigem Druckabfall beim Hindurchströmen von Luft ergeben.

Es kann sich als besonders sinnvoll erweisen, wenn zumindest zwei, vorzugsweise sämtliche der axial hintereinander angeordneten Segmente eine unterschiedliche Formgebung aufweisen. Die Unterschiede in der Formgebung können sich dabei insbesondere auf die Oberflächenformgebung, die Oberflächenbeschaffenheit, unterschiedliche Materialien (insbesondere unterschiedliche Oberflächenbeschichtungen), unterschiedliche Anstellwinkel, unterschiedliche Ausnehmungen, das Vorsehen von Ausnehmungen und Durchbrüchen und auf die Dicke des entsprechenden Segments beziehen. Die unterschiedliche Formgebung der einzelnen Segmente kann dabei insbesondere so gewählt werden, dass sich eine besonders vorteilhafte Gesamtausbildung der resultierenden Schaufel ergibt. Die Ausbildung einer derartigen, besonders vorteilhaften Gesamtausbildung zumindest einer Schaufel kann sich dabei auf eine der beiden Endstellungen (im Modus "Diffus" bzw. im Modus "Gesamtluft"), auf die beiden Endstellungen, aber auch auf Zwischenstellungen zwischen diesen beiden Endstellungen beziehen. Dabei ist es nicht unbedingt notwendig, in genau einer der möglichen Stellungen (bzw. in einer eingeschränkten Anzahl an möglichen Stellungen) das jeweilige Optimum zu erzielen. Vielmehr kann es auch vorteilhaft sein, ein gewisses Abweichen vom Optimum zuzulassen, insbesondere wenn sich dadurch bei einer besonders großen Anzahl an möglichen Stellungen der einzelnen Segmente zueinander eine Oberflächenform ergibt, die dem Optimum relativ nahkommt.

Eine besonders vorteilhafte Ausbildung des Luftausströmers kann sich ergeben, wenn sich insbesondere im Modus "Diffus" (gegebenenfalls aber auch im Modus "Gesamtluft" und/oder in einer oder mehreren Zwischenstellungen) eine im Wesentlichen bündige Oberflächenkonturierung zumindest einer Schaufel ergibt, welche bevorzugt annähernd parallel zur Kurve der Segmente der entsprechenden Schaufel verläuft. Mit einer derartigen "glatten" Oberflächengestaltung können unerwünschte Verwirbelungen der Luft beim Überstreichen der entsprechenden Oberfläche weitgehend vermieden werden. Dadurch kann insbesondere der Druckabfall längs des Luftausströmers besonders effektiv vermindert werden. Gerade in der Stellung "diffus" (bzw. in einer Stellung mit teilweise "diffusem" Anteil) ist es in der Regel unvermeidlich, einen gewissen Druckabfall der hindurch strömenden Luft zu verursachen. Insofern kann es sich als besonders sinnvoll erweisen, gerade in diesen Stellungen, bei denen es ohnehin zu einem erhöhten Druckabfall kommt, eine zusätzliche Erhöhung des Druckabfalls durch unnötige Verwirbelungen, zu vermindern. Verläuft die Oberflächenkonturierung der Schaufel darüber hinaus annähernd parallel der Kurve der Segmente der entsprechenden Schaufel, so kann die Schaufel mit weitgehend minimalem Materialaufwand realisiert werden. Dies kann insbesondere die Herstellungskosten verringern.

Besonders sinnvoll kann es sein, wenn zumindest zwei axial benachbart hintereinander angeordnete Segmente einander in Axialrichtung gesehen zumindest bereichsweise überlappen. Eine derartige Ausbildung kann ein Hindurchströmen von Luft zwischen den Segmenten nach Art einer Lamellendichtung wirksam verringern. Dadurch kann die Effektivität des Luftausströmers nochmals vergrößert werden. Eine derartige Überlappung von Teilbereichen hintereinander angeordneter Segmente kann beispielsweise durch L-förmige Ausnehmungen realisiert werden. Dabei wird jeweils eine erste L-förmige Ausnehmung eines Segments gegenüberliegend einer zweiten "auf den Kopf stehenden" L-förmigen Ausnehmung des benachbarten Segments angeordnet. Die L-förmigen Ausnehmungen können dabei so dimensioniert sein, dass die einander zugewandten Längsseiten der L-förmigen Ausnehmungen im Modus "Direkttuft" einander kontaktieren. In anderen Stellungen kann sich dagegen ein Hohlraum, der von den Oberflächen der L-förmigen Ausnehmungen begrenzt wird, ergeben. Der Hohlraum kann dabei sein maximales Volumen einnehmen, wenn sich der Luftausströmer in seiner Endstellung im Modus "Diffus" befindet. Die einzelnen Segmente können dabei jeweils so dicht aneinander anliegen, dass durch die vorhandenen Spalten im Wesentlichen keine Luft hindurch strömen kann. Sind die entsprechenden Spalten besonders dicht ausgeführt, kann es sich gegebenenfalls als erforderlich erweisen, Luftzuführungskanäle vorzusehen, die zu den inneren Hohlräumen mit variablem Volumen führen, vorzusehen. Dadurch kann eine Belüftung eines sich vergrößerten Hohlraums, bzw. eine Entlüftung eines sich verkleinerten Hohlraums realisiert werden. Jedoch sind selbstverständlich auch andere Ausbildungsformen denkbar.

Weiterhin kann es sinnvoll sein, zumindest einen zusätzlichen Luftführungskanal vorzusehen, der zumindest überwiegend, vorzugsweise im Wesentlichen dauerhaft in einem Modus "Gesamtluft" betrieben wird. Versuche mit Testpersonen haben ergeben, dass ein großer Anteil der Probanden eine (zumindest) teilweise, dauerhafte Luftanströmung mit einem gerichteten Luftstrahl (eine sogenannte "Spot"-Luftanströmung wünscht. Durch das Vorsehen eines derartigen, dauerhaften Spotanteils kann ein Ausströmer realisiert werden, der besonders hohen Komfortansprüchen genügen kann. Selbstverständlich ist es nicht ausgeschlossen, dass der Spotanteil beispielsweise mit Hilfe von Verschlussklappen zumindest zeitweise verschlossen werden kann. Wesentlich ist es in diesem Zusammenhang, dass zusätzlich (und nicht nur alternativ) zur diffusen Luftausströmung eine gerichtete Luftausströmung ("Spot"-Luftausströmung) erfolgen kann.

Insbesondere in diesem Zusammenhang kann es sich als sinnvoll erweisen, wenn zumindest einer der Luftführungskanäle als ringförmiger Luftführungskanal und/oder als kreisförmiger Luftführungskanal ausgebildet ist. Beispielsweise ist es denkbar, dass ein Spotkanal mit kreisrundem Querschnitt vorgesehen wird, der von einem ringförmig angeordneten Bereich umgeben wird, in dem das bzw. die vorab beschriebenen verstellbaren Luftleitelemente angeordnet sind. Dabei ist es auch möglich, dass in der Mitte des kreisrunden zusätzlichen Luftführungskanals (beispielsweise zentral in der Mitte) ein Betätigungselement für den Luftausströmer angeordnet wird. In diesem Falle ergeben sich quasi zwei ringförmige Luftführungskanäle, wobei der Luftführungskanal mit den Luftleitelementen radial außen, der zusätzliche Luftführungskanal für die Spotbelüftung radial in der Mitte angeordnet ist. Die radiale Anordnung kann jedoch auch umgedreht werden, so dass sich ein radial außen befindlicher Ring für die Spotbelüftung ergibt, in dessen Mitte ein ringförmiger oder kreisförmiger Luftführungskanal (mit oder ohne Betätigungselement) mit Luftleitelementen angeordnet wird.

In einer möglichen Ausführungsform ist der Luftführungskanal als ein Ringkanal oder Ringrohr ausgebildet, der bzw. das als äußerer Luftführungskanal einen weiteren, inneren Luftführungskanal umgibt und parallel zu diesem verläuft. Dabei sind die beiden Luftführungskanäle zylindrisch und koaxial ausgebildet. Mit anderen Worten: Ein äußerer, ringförmiger Luftführungskanal umgibt einen inneren, zylinderförmigen Luftführungskanal. Auf diese Weise ist ein zweikanaliger Luftausströmer mit einem äußeren Luftführungskanal mit Schaufelkranz mit einstellbarer Fächer- oder Helix-Form für den Modus "Diffus" und "Gesamtluft" und mit einem inneren Luftführungskanal für einen Modus "gerichtete Strömung" realisierbar. Somit sind gleichzeitig verschiedene Belüftungsarten, z. B. eine spotförmige Belüftung und eine diffuse Belüftung, ermöglicht. Durch den verringerten Druckabfall bei einer diffusen Belüftung kann eine höhere Effizienz der Belüftung erreicht werden. Darüber hinaus ist eine einfache Montage und Herstellung durch Zusammensetzen von schalenförmigen, insbesondere halb- oder viertelschaligen Komponenten, z. B. halbschaligen oder viertelschaligen Gehäuseteile, in welchen die ringförmigen Scheibenelementen aufeinander stapelbar angeordnet sind, ermöglicht.

Erfindungsgemäß weist zumindest ein Segment eine hülsenartige Verlängerung auf, welche als Lagerbuchse für zumindest einen Teil der anderen Segmente wirkt. Auf diese Weise kann besonders einfach, kostensparend und platzsparend eine Baueinheit geschaffen werden, welche die einzelnen Segmente aufweist. Da die Segmente in aller Regel aus dem gleichen Material gefertigt werden können, kann dadurch auch eine gleichmäßige und reibungsarme (insbesondere wenn ein geeignetes Material für die Segmente gewählt wird) Lagerung der Segmente aneinander realisiert werden. Durch die hülsenartige Ausbildung des Lagerbereichs kann darüber hinaus auf besonders einfache und effektive Weise ein Durchströmen von Luft durch den zwischen zwei Segmenten befindlichen Spalt hindurch wirksam unterbunden werden.

Sinnvoll kann es auch sein, wenn zumindest eine Selbsthemmvorrichtung für zumindest ein Segment vorgesehen wird, welche insbesondere als Engpassung, als reibungsbehaftetes Werkstoffmaterial, als Einlageeinrichtung und/oder als Aufrauung ausgebildet ist. Dadurch kann ein definiertes Reibungsverhalten des entsprechenden Segments realisiert werden. Insbesondere kann die Reibung ausreichend niedrig gewählt werden, dass ein komfortables Bedienen des Luftausströmers, insbesondere der Stellung des Luftleitelements, möglich ist. Andererseits kann die Reibung ausreichend groß gewählt werden, dass eine unbeabsichtigte Verstellbewegung des entsprechenden Segments verhindert wird, ein Klappern der Segmente durch eine (geringfügige) angulare Bewegung unterbunden wird und ein zu leichtes ("weiches") Betätigen der Betätigungsvorrichtung vermieden wird. Als Einlageeinrichtung ist beispielsweise ein Gummimaterial, ein Schaumstoffmaterial bzw. ein eingespritztes Schaummaterial möglich. Auch ist es möglich, die Werkstoffoberflächen mit einem Belag, beispielsweise aus einem Gummimaterial oder einem gummiartigen Material, zu versehen. Auch ist es möglich, beispielsweise auf einem Spritzgussformteil mit Hilfe eines geeigneten Prozesses eine aufgeraute Oberfläche auszubilden (z.B. durch Aufrauung).

Zweckmäßigerweise sind die Segmente bei einer zweikanaligen Ausführungsform des Luftausströmers konzentrisch um den inneren Luftführungskanal gelagert.

In einer bevorzugten Ausführungsform sind die Segmente jeweils als ein Scheibenelement ausgebildet, welches aus mindestens einem Ringelement gebildet ist, das eine der Anzahl der Schaufeln entsprechende Anzahl von radial angeordneten Stegen aufweist.

Dabei kann das Ringelement in einer möglichen Ausführungsform als ein inneres Ringelement mit mindestens einem radial nach außen weisenden Steg bei einer einzelnen Schaufel oder mit mehreren Stegen bei mehreren Schaufeln ausgebildet sein. Alternativ kann das jeweilige Scheibenelement aus einem inneren Ringelement und einem konzentrisch um dieses angeordneten äußeren Ringelement gebildet sein, zwischen denen mindestens ein Steg oder mehrere Stege radial angeordnet sind.

Zweckmäßigerweise kann der Luftausströmer mit zumindest einer Mitnehmereinrichtung ausgebildet werden, welche zwischen zumindest zwei der axial hintereinander angeordneten Segmente eine Bewegung vermittelt. Bei der Mitnehmereinrichtung kann es sich insbesondere um eine Einrichtung handeln, die eine Mitnahme des jeweils benachbarten Segments bewirkt, sobald ein bestimmter Verstellwinkelbereich zwischen den beiden, einander benachbarten Segmenten, überschritten würde. Der zulässige Winkelbereich für die Verdrehung einander benachbarter Segmente kann beispielsweise entsprechend dem jeweils zulässigen Staffelungswinkel (welcher nicht unbedingt mit dem mittleren Staffelungswinkel übereinstimmen muss) definiert werden. Möglich ist es auch, den zulässigen Winkelbereich um einen gewissen Faktor höher zu wählen. Als untere Grenze für den zulässigen Winkelbereich ist beispielsweise ein Winkel von 0° denkbar. Dadurch kann es ermöglicht werden, dass im Modus "Direktluft" die einzelnen Segmente optimal fluchtend hintereinander angeordnet sind. In diesem Falle kann die Mitnehmereinrichtung im Übrigen zusätzlich als Anschlag für die Betätigung der Betätigungsvorrichtung dienen. Bei einer entsprechenden Bemaßung des zulässigen Winkelbereichs (wobei der zulässige Winkelbereich auch von Segment zu Segment unterschiedlich sein kann), kann eine entsprechende Funktionalität auch für den Modus "Diffus" realisiert werden. Insbesondere kann die Mitnehmereinrichtung zumindest teilweise als Angularstaffelungspositionierungseinrichtung wirken.

Zur Bildung der fächerartigen Luftleitfläche aus den Segmenten einer Schaufel durch deren entsprechenden Stellung kann das jeweilige innere Ringelement mit einer Ausnehmung versehen sein, in welche ein Stift des inneren Ringelementes des axial in Strömungsrichtung nachfolgenden Segmentes zwischen der den Modus "Diffus" bewirkenden Stellung und der den Modus "Gesamtluft" bewirkenden Stellung angular verstellbar ist. Hierzu können die Segmente insbesondere aus weitgehend identischen Scheibenelementen gebildet sein, die im zusammengesetzten Zustand übereinander angeordnet sind.

Möglich ist es, wenigstens ein Betätigungselement vorzusehen, welches vorzugsweise integral, vorzugsweise einteilig und/oder einstückig mit einem Antriebssegment ausgebildet ist. Dadurch kann dem Benutzer eine besonders unmittelbar und direkt wirkende Möglichkeit der Einstellung des Luftausströmers auf seine individuellen Wünsche ermöglicht werden. Darüber hinaus kann der Luftausströmer besonders einfach und kostengünstig ausgebildet werden.

Vorzugsweise sind die axial in Strömungsrichtung aufeinander gesetzten Segmente mittels eines Betätigungselementes oder Verstellelements progressiv bzw. sequentiell verstellbar, insbesondere verdrehbar. Hierbei werden die Segmente durch aufeinanderfolgende Verstellung, insbesondere angulare Verdrehung zwischen der einen, eine fächerartige Luftleitfläche bildenden Stellung (= Modus "Diffus") und der anderen, eine weitgehend geradlinige Luftleitfläche bildenden Stellung (= Modus "Gesamtluft") angular verdreht. Die Verstellung erfolgt im Wesentlichen dergestalt, dass eine Verstellung, insbesondere Verdrehung eines ersten Segments nach einem festgelegten Verstell- oder Verdrehweg die Mitnahme eines zweiten, dem ersten Segment benachbarten Segments aktiviert, welches wiederum nach einem festgelegten Verstell- oder Verdrehweg die Mitnahme eines dritten, dem zweiten Segment benachbarten Segments aktiviert. Dies lässt sich solange fortsetzen, bis das vorletzte Segment das letzte Segment verstellt bzw. verdreht hat.

Zweckmäßigerweise ist das Betätigungselement mittig auf das axial in Strömungsrichtung letzte Segment aufsetzbar und als ein Betätigungs- oder Verstellring ausgebildet. Durch die über Ausnehmung und Stift axial miteinander in Verbindung stehenden Segmente einer Schaufel und Verstellen, insbesondere Verdrehen des letzten Segmentes mittels des Betätigungselementes sind die Segmente zueinander angular verstellbar, so dass im Modus "Diffus" eine fächerartige Luftleitfläche oder im Modus "Gesamtluft" eine weitgehend geradlinige Luftleitfläche gebildet ist.

Hierbei kann das Betätigungselement beispielsweise mit Stiften versehen sein, die in Ausnehmungen des letzten Segmentes des beweglichen Schaufelkranzes eingreifen und in diesen zur Vermeidung einer Verkantung arretierbar sind. Darüber hinaus weist das Betätigungselement strömungsausgangsseitig einen geformten Rand auf, der beispielsweise mit einer entsprechenden Struktur, z.B. Greifstruktur, versehen ist, die ein einfaches Bedienen ermöglicht. Zusätzlich kann das Betätigungselement strömungsausgangsseitig mit festen oder verstellbaren Streben oder Lamellen versehen sein. Diese dienen insbesondere der Versteifung des ringförmigen Betätigungselementes.

In einer weiteren Ausführungsform ist zwischen dem Betätigungselement und dem letzten Segment ein Federelement angeordnet. Hierdurch wird sichergestellt, dass im zusammengesetzten und arretierten Zustand des Betätigungselementes die aufeinander gestapelten Segmente spaltfrei aufeinander angeordnet sind.

Bei einer möglichen Ausbildungsform des Luftausströmers können die Segmente einer vorgegebenen Randkonturierung folgen, insbesondere einer Luftführungskanalkonturierung und/oder einer Gehäusekonturierung. Mit anderen Worten können die Innendurchmesser bzw. Außendurchmesser der Segmente unterschiedlich groß gewählt werden. Dadurch kann der zur Verfügung stehende Bauraum optimal ausgenutzt werden. Insbesondere kann der Druckabfall der durch den Luftausströmer hindurchströmenden Luft reduziert werden. Auch können nicht oder nur schlecht durchlüftete Hohlräume vermieden werden, welche beispielsweise zu Bakterienansammlungen führen könnten, die wiederum zu schlechten Gerüchen führen könnten. Beispielsweise könnte die Außenkonturierung der aneinander angeordneten Segmente kugelsegmentartig ausgeführt sein, um an einen teilweise kugelförmig ausgebildeten Hohlraum angepasst zu werden.

In einer weiteren möglichen Ausführungsform bilden die äußeren Ringelemente mehrerer axial nacheinander angeordneter Segmente die Innenwandung des äußeren Luftführungskanals. Darüber hinaus können die inneren Ringelemente mehrerer axial nacheinander angeordneter Segmente die Innenwandung des inneren Luftführungskanals bilden. Alternativ oder zusätzlich können die Segmente und somit die Scheibenelemente von einem im Wesentlichen kugelförmigen Segmentgehäuse umgeben sein, wobei die Scheibenelemente jeweils nur aus einem inneren Ringelement mit radial nach außen angeordneten Stegen oder aus einem äußeren und inneren Ringelement mit dazwischen radial angeordneten Stegen gebildet sein können.

Zur Ausrichtung der Strömung am Austritt des Luftausströmers ist der äußere Luftführungskanal von einem im Wesentlichen kugelförmigen Gehäuse umgeben, in welches der äußere Luftführungskanal, d.h. dessen umgebendes Segmentgehäuse oder dessen äußere, insbesondere kugelförmige Ringelemente, in Art eines Kugelgelenkes drehbar gelagert ist. Das kugelförmige Gehäuse des Luftausströmers bildet eine Kugelpfanne, in welche das kugelförmige Segmentgehäuse mit den darin angeordneten Segmenten bzw. die kugelförmigen Ringelemente ohne zusätzliches Gehäuse drehbar gelagert sind. Durch das außen auf das letzte Segment und gegebenenfalls auf das Segmentgehäuse aufgesetzte und auf diesem arretierbare Betätigungseiement ist das Luftleitelement im kugelförmigen Gehäuse des Luftausströmers in mehreren Rotationsfreiheitsgraden verstellbar, indem das Betätigungselement sowohl radial als auch angular bewegbar ist und das Luftleitelement entsprechend im Gehäuse relativ zur Längsachse des Luftführungskanals verstellbar ist. Durch die radiale Verstellung ist eine beliebige Strömungsrichtung und/oder durch die angulare Verstellung eine beliebige Strömungsart für den Luftausströmer einstellbar.

In einer weiteren vorteilhaften Ausführungsform sind die Stege eben ausgebildet und zum Strömungsquerschnitt geneigt angeordnet. Alternativ können die Stege gewölbt ausgebildet und zum Strömungsquerschnitt senkrecht angeordnet sein. Auch können die Stege aus einem flexiblen, insbesondere elastischen Material gebildet sein, so dass diese durch Verdrehung gewunden werden können.

In einer Weiterbildung der Erfindung können mehrere gleichartige oder verschiedenartige Luftleitelemente axial hintereinander und/oder nebeneinander angeordnet sein. Bei einer parallel nebeneinander vorgesehenen Anordnung der Luftleitelemente ist der Luftausströmer als eine Doppeldüse ausgeführt. Bei mehreren axial hintereinander angeordneten Luftleitelementen und somit mehreren axial hintereinander angeordneten Schaufelkränzen ist insbesondere eine Einstellung der Segmente in Form einer Mehrfach-Helix ermöglicht. Zweckmäßigerweise sind die Luftleitelemente mittels separater Bedienelemente und/oder eines gemeinsamen Betätigungselementes asynchron bzw. synchron verstellbar. Auch können Klappen oder Lamellen oder andere geeignete Luftleitelemente vor und/oder hinter dem oder den Schaufelkränzen im Luftführungskanal angeordnet sein. Insbesondere ist das als innerer Luftführungskanal dienende, innere Ringelement mit einer Klappe versehen, welche den inneren Luftführungskanal zur Einstellung einer gerichteten Strömung vollständig schließt oder öffnet.

Vorzugsweise ist im Bereich des Luftleitelements zur Vergrößerung des Strömungsquerschnitts der Luftausströmer und somit dessen Luftführungskanal im Wesentlichen kugelförmig ausgeführt, wobei in diesen strömungseingangsseitig ein zylindrischer Luftführungskanal mündet.

Ausführungsbeispiele der Erfindung werden anhand einer Zeichnung näher erläutert. Darin zeigen:
- Fig. 1: schematisch in Explosionsdarstellung einen als Doppeldüse ausgebildeten Luftausströmer mit jeweils einem als Schaufelkranz ausgebildeten Luftleitelement, dessen axial hintereinander angeordnete Segmente relativ zueinander angular verstellbar sind,
- Fig. 2: schematisch den Schaufelkranz gemäß Figur 1 in perspektivischer Darstellung im zusammengebauten Zustand in der Stellung Modus "Diffus",
- Fig. 3: schematisch den Schaufelkranz im Schnitt III gemäß Figur 4,
- Fig. 4: schematisch den Schaufelkranz gemäß Figur 2 in Draufsicht im zusammengebauten Zustand in der Stellung Modus "Diffus",
- Fig. 5: schematisch den Schaufelkranz gemäß Figur 1 in perspektivischer Darstellung im zusammengebauten Zustand in der Stellung Modus "Gesamtluft",
- Fig. 6: schematisch den Schaufelkranz im Schnitt VI gemäß Figur 7,
- Fig. 7: schematisch den Schaufelkranz gemäß Figur 5 in Draufsicht im zusammengebauten Zustand in der Stellung Modus "Gesamtluft",
- Fig. 8: schematisch in perspektivischer Darstellung bei aufgeschnittenem Gehäuse ein darin auf einem inneren Ringelement angeordnetes Segment des Schaufelkranzes,
- Fig. 9: schematisch in perspektivischer Darstellung bei aufgeschnittenem Gehäuse ein auf dem inneren Ringelement angeordneten Segment in axialer Richtung weiteres aufsetzbares Segment des Schaufelkranzes,
- Fig. 10: schematisch in perspektivischer Darstellung bei aufgeschnittenem Gehäuse zwei aufeinander gesetzte Segmente des Schaufelkranzes in der Stellung Modus "Diffus",
- Fig. 11: schematisch in perspektivischer Darstellung bei aufgeschnittenem Gehäuse zwei aufeinander gesetzte Segmente des Schaufelkranzes in einer Zwischenstellung zwischen der Stellung Modus "Diffus" und der Stellung Modus "Gesamtluft",
- Fig. 12: schematisch im Längsschnitt eine Ausführungsform für einen Luftausströmer mit mehreren auf ein inneres Ringelement aufgesetzten Segmenten, die von einem auf das strömungsausgangsseitig letzte Ringelement aufgesetztem Betätigungselement angular verstellbar sind,
- Fig. 13: schematisch den Schaufelkranz gemäß einem zweiten Ausführungsbeispiel in teilweise durchbrochener perspektivischer Darstellung in zusammengebautem Zustand in der Stellung Modus "Gesamtluft",
- Fig. 14: schematisch den Schaufelkranz gemäß Fig. 13 in der Stellung Modus "Diffus",
- Fig. 15: schematisch den Schaufelkranz gemäß Fig. 13 in Draufsicht im zusammengebauten Zustand in der Stellung Modus "Direktluft",
- Fig. 16: schematisch den Schaufelkranz im Schnitt A gemäß Fig. 15,
- Fig. 17: schematisch den Schaufelkranz im Schnitt B gemäß Fig. 15,
- Fig. 18: schematisch den Schaufelkranz gemäß Fig. 14 in Draufsicht in der Stellung Modus "Diffus",
- Fig. 19: schematisch den Schaufelkranz im Schnitt E gemäß Fig. 18,
- Fig. 20: schematisch den Schaufelkranz im Schnitt F gemäß Fig. 15, wobei sich der Schaufelkranz in der Stellung Modus "Gesamtluft" befindet,
- Fig. 21: eine schematische Gegenüberstellung einer Schaufel in der Stellung Modus "Gesamtluft" sowie in der Stellung Modus "Diffus",
- Fig. 22: eine schematische Darstellung einer Schaufelkontur im Querschnitt,
- Fig. 23: eine schematische Darstellung der Dimensionierung eines Strahlenkranzes in Draufsicht,
- Fig. 24: schematisch in Querschnittsdarstellung ein Ausführungsbeispiel eines Strahlenkranzes mit integraler Lagerbuchse,
- Fig. 25: schematisch in Querschnittsansicht ein weiteres Ausführungsbeispiel eines Strahlenkranzes mit integrierter Lagerbuchse,
- Fig. 26: eine schematische Darstellung unterschiedlicher Anordnungsmöglichkeiten von Luftkanälen mit Schaufelkranz und zusätzlichen Spot-Luftkanälen,
- Fig. 27: ein weiteres Ausführungsbeispiel für einen Ausströmer mit Strahlenkranz und integriertem zusätzlichem Spot-Luftkanal,
- Fig. 28: schematisch in Querschnittsansicht ein weiteres Ausführungsbeispiel eines Strahlenkranzes mit einem an eine Gehäusekontur angepassten Segmentblock.

Einander entsprechende Teile sind in allen Figuren mit den gleichen Bezugszeichen versehen.

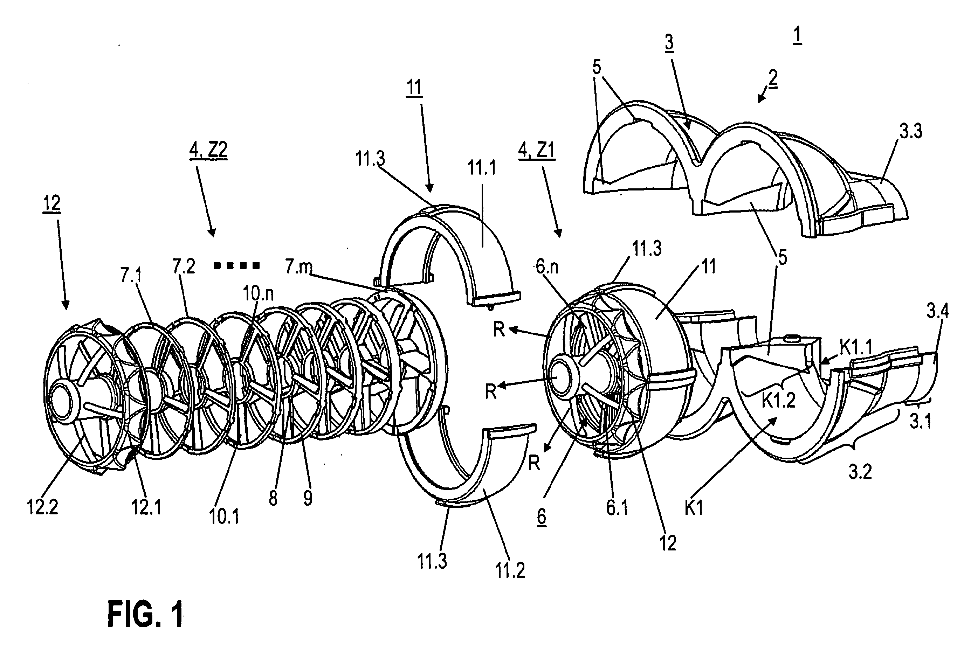

Figur 1 zeigt in Explosionsdarstellung einen als Doppeldüse 2 ausgebildeten Luftausströmer 1. Alternativ kann der Luftausströmer 1 in nicht näher dargestellter Form auch als eine Einfachdüse ausgebildet sein. Nachfolgend wird die Erfindung anhand des Aufbaus einer der Düsen näher beschrieben.

Der Luftausströmer 1 weist je Düse einen Luftführungskanal K1 auf, der strömungseingangsseitig einen hohlzylindrischen Abschnitt K1.1 und strömungsausgangsseitig einen kugelförmigen Abschnitt K1.2 aufweist. Darüber hinaus weist der Luftausströmer 1 ein Gehäuse 3 auf, das in Analogie zur Form des Luftführungskanals K1 strömungseingangsseitig einen hohlzylindrischen Abschnitt 3.1 und strömungsausgangsseitig einen kugelförmigen Abschnitt 3.2 aufweist. Das Gehäuse 3 ist beispielsweise aus zwei Halbschalen 3.3 und 3.4 gebildet. Das Gehäuse 3 kann beispielsweise aus einem Kunststoffformteil oder einem anderen geeigneten Material gebildet sein.

Im kugelförmigen Abschnitt K1.2 des Luftführungskanals K1 und somit des kugelförmigen Abschnitts 3.2 des Gehäuses 3 ist ein Luftleitelement 4 zur Einstellung von verschiedenen Strömungsarten und/oder Strömungsrichtungen R angeordnet. Dabei weist das Luftleitelement 4 in der Außenkontur im Wesentlichen eine Kugelform auf und ist in Art eines Kugelgelenkes im kugelförmigen Abschnitt 3.2 des Gehäuses 3 drehbar gelagert. Der Luftausströmer 1 wird daher auch als Kugeldüse bezeichnet.

Zur Verstellung der Strömungsrichtung R des Luftausströmers 1 sind innenseitig in die jeweilige Halbschale 3.3 und 3.4 Führungssicken 5 eingebracht. Je nach Vorgabe der einstellbaren Freiheitsgrade ist eine entsprechende Anzahl von Führungssicken 5 eingebracht. Durch translatorisches Bewegen des Luftleitelements 3 nach oben, nach unten oder zur Seite und/oder durch eine Drehbewegung wird strömungsausgangsseitig des Luftausströmers 1 eine entsprechende Strömungsrichtung R bzw. Strömungsart - Diffusströmung oder gerichtete Strömung - am Luftausströmer 1 eingestellt.

Das Luftleitelement 4 ist in der Figur 1 sowohl im zusammengebauten Zustand Z1 als auch zur besseren Darstellung des Aufbaus des Luftleitelements 4 im auseinander genommenen Zustand Z2 gezeigt.

Das Luftleitelement 3 ist in Art eines Schaufelkranzes 6 mit einer vorgegebenen Anzahl von Schaufeln 6.1 bis 6.n ausgeführt. Dabei ist der Schaufelkranz 6 und somit jede der Schaufeln 6.1 bis 6.n aus einer vorgegebenen Anzahl von axial hintereinander angeordneten Segmenten 7.1 bis 7.m gebildet. Das jeweilige Segment 7.1 bis 7.m ist als ein Scheibenelement ausgeführt, welches im Ausführungsbeispiel nach Figur 1 ein inneres Ringelement 8 und ein um dieses konzentrisch angeordnetes, äußeres Ringelement 9 aufweist, zwischen denen eine vorgegebene Anzahl von Stegen 10.1 bis 10.n radial angeordnet ist. Dabei kann das innere Ringelement 8 zusätzlichen einen inneren Luftführungskanal K2 bilden. Darüber hinaus entspricht die Anzahl der Stege 10.1 bis 10.n eines Segmentes 7.1 bis 7.m der Anzahl der Schaufeln 6.1 bis 6.n. In einer alternativen, nicht näher dargestellten Ausführungsform können die Segmente 7.1 bis 7.m jeweils aus einem inneren Ringelement 8, auf welchem radial nach außen weisende Stege 10.1 bis 10.n angeordnet sind, gebildet sein.

Die Segmente 7.1 bis 7.m können, wie in Figur 1 dargestellt, von einem Segmentgehäuse 11 umgeben sein, in welchem die Segmente 7.1 bis 7.m zumindest relativ zueinander angular verstellbar sind. Das Segmentgehäuse 11 ist für eine einfache Montage mehrteilig ausgeführt, insbesondere zweischalig aus einer ersten Halbschale 11.1 und einer zweiten Halbschale 11.2 gebildet, die aufeinander steckbar sind. Das Segmentgehäuse 11 ist mit nach außen abstehenden Führungsstegen 11.3 versehen, die in den Führungssicken 5 des Gehäuses 3 geführt sind und zur Einstellung der Strömungsrichtung R durch Verstellung des Luftleitelements 4 dienen.

Zur Einstellung der Strömungsart - Modus "Diffus" und Modus "Gesamtluft" bzw. eine Zwischenstellung - ist ein Betätigungselement 12 in Form eines Verstellringes mittig auf das axial in Strömungsrichtung R letzte Segment 7.1 aufsetzbar. Die axial hintereinander und miteinander verbindbaren Segmente 7.1 bis 7.m sind durch Verstellen, insbesondere Verdrehen des letzten Segmentes 7.1 mittels des Betätigungselementes 12 dabei relativ zueinander angular verstellbar, so dass im Modus "Diffus" eine fächerartige Luftleitfläche und im Modus "Gesamtluft" eine weitgehend geradlinige Luftleitfläche gebildet ist.

Für eine Fixierung des Betätigungselementes 12 am letzten Segment 7.1 kann das Betätigungselement 12 beispielsweise in nicht näher dargestellter Art und Weise mit Stiften versehen sein, die in Ausnehmungen des letzten Segmentes 7.1 eingreifen und in diesen zur Vermeidung einer Verkantung arretierbar sind. Darüber hinaus weist das Betätigungselement 12 strömungsausgangsseitig einen geformten Rand 12.1 auf, der beispielsweise mit einer entsprechenden Struktur, z.B. Greifstruktur, versehen ist. Zusätzlich kann das Betätigungselement 12 strömungsausgangsseitig mit festen oder verstellbaren Streben 12.2 oder Lamellen versehen sein.

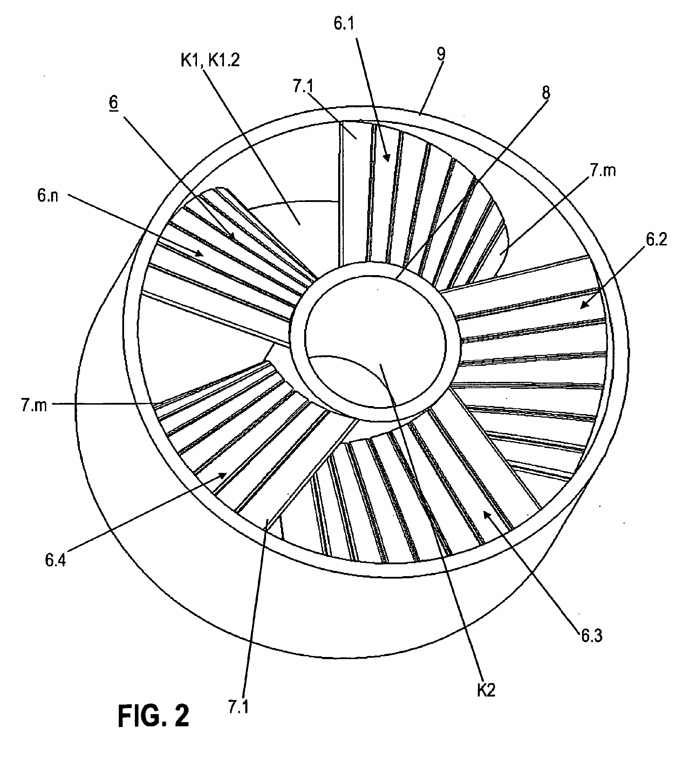

Figur 2 zeigt schematisch den Schaufelkranz 6 gemäß Figur 1 in perspektivischer Darstellung im zusammengebauten Zustand in der Stellung Modus "Diffus". In dieser Endstellung sind die Segmente 7.1 bis 7.m der jeweiligen Schaufel 6.1 bis 6.n derart angular verstellt, dass sich eine fächerartige oder helixförmige Luftleitfläche in Strömungsrichtung R zur Erzielung einer Drallströmung bildet.

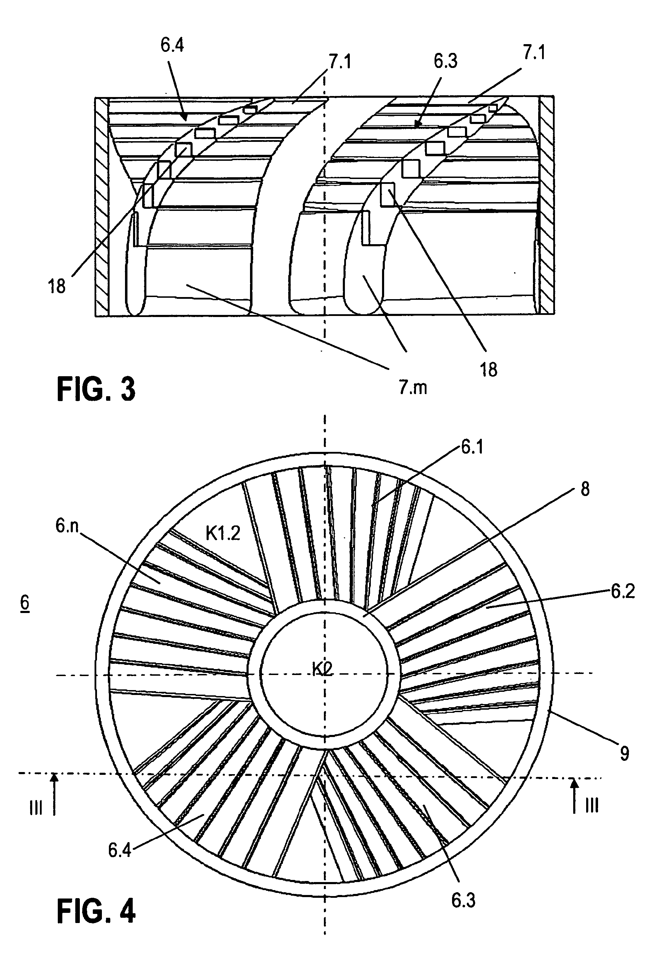

Figur 3 zeigt schematisch den Schaufelkranz 6 im zusammengebauten Zustand mit den in der Stellung Modus "Diffus" positionierten Segmenten 7.1 bis 7.m der jeweiligen Schaufel 6.1 bis 6.n im Schnitt III gemäß Figur 4. Figur 4 zeigt schematisch den Schaufelkranz 6 gemäß Figur 2 in Draufsicht mit den in der Stellung Modus "Diffus" positionierten Segmenten 7.1 bis 7.m. Dabei verringern die Segmente 7.1 bis 7.m der Schaufeln 6.1 bis 6.n den Strömungsquerschnitt maximal bei maximaler Verdrallung des Luftstroms durch die fächerartige Luftleitfläche der jeweiligen Schaufel 6.1 bis 6.n. Die in der Stellung "Diffus" durch die Ausgestaltung der Segmente 7.1 bis 7.m entstehenden Hohlräume 18 werden beim Übergang auf die Stellung "Gesamt" verkleinert bzw. verschwinden in vollständig ineinander geschachtelter Stellung der Segmente 7.1 bis 7.m.

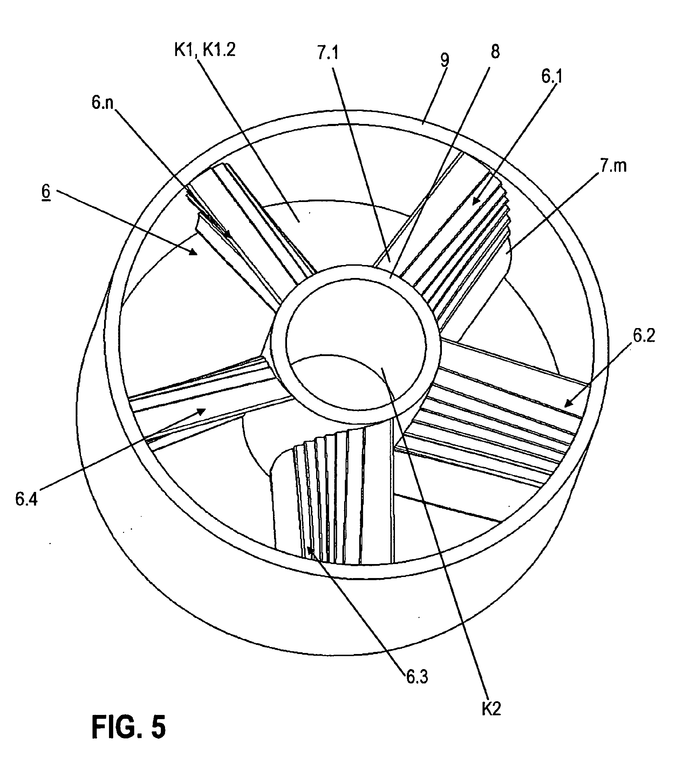

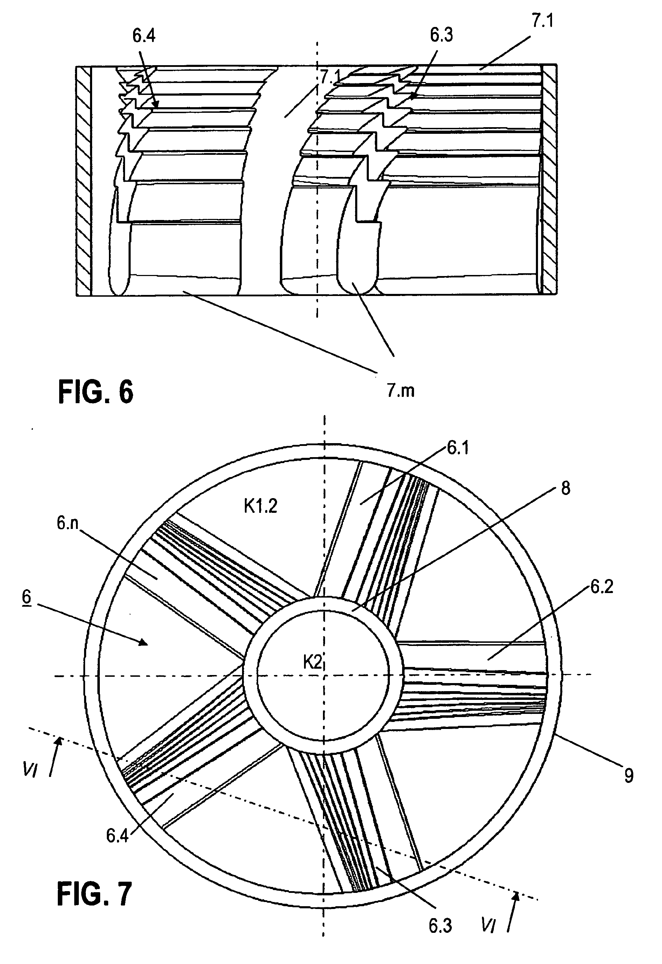

Figur 5 zeigt schematisch den Schaufelkranz 6 gemäß Figur 1 in perspektivischer Darstellung im zusammengebauten Zustand mit den in der Stellung Modus "Gesamtluft" positionierten Segmenten 7.1 bis 7.m. In Figur 6 ist der Schaufelkranz 6 im Schnitt VI gemäß Figur 7 dargestellt und Figur 7 zeigt den Schaufelkranz 6 gemäß Figur 5 in Draufsicht mit den in der Stellung Modus "Gesamtluft" positionierten Segmenten 7.1 bis 7.m. Dabei verringern die Segmente 7.1 bis 7.m der Schaufeln 6.1 bis 6.n den Strömungsquerschnitt minimal bei minimaler Verdrallung des Luftstroms, so dass sich eine weitgehend gerichtete Strömung im äußeren Luftführungskanal K1.2 ergibt. In dieser Stellung sind die Segmente 7.1 bis 7.m in Strömungsrichtung R weitgehend senkrecht übereinander angeordnet, so dass sich eine weitgehend geradlinige Luftleitfläche für die jeweilige Schaufel 6.1 bis 6.n ergibt.

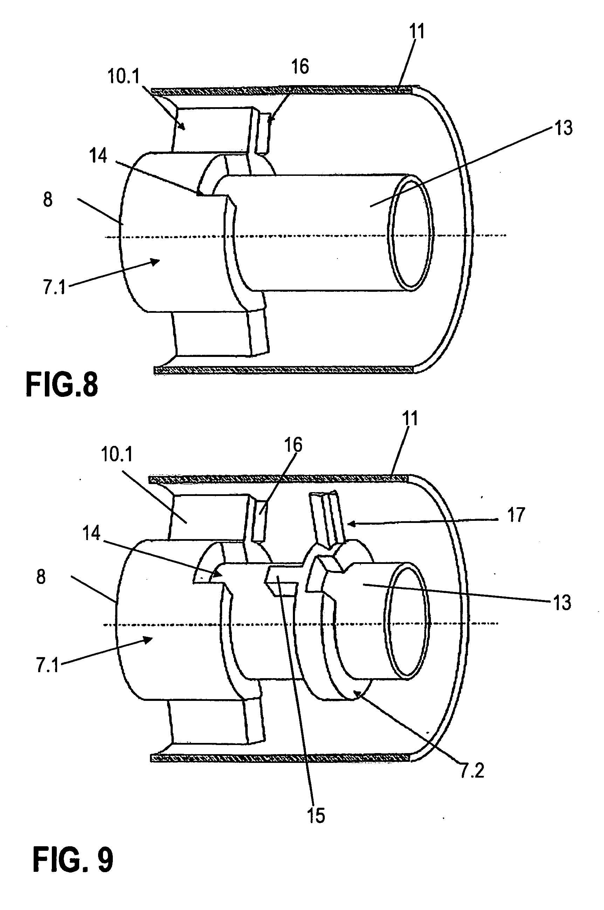

Figur 8 zeigt schematisch in perspektivischer Darstellung bei aufgeschnittenem Segmentgehäuse 11 ein Ausführungsbeispiel für ein im Segmentgehäuse 11 angeordnetes Segment 7.1 mit einem inneren Ringelement 8 und radial nach außen weisenden Stegen 10.1 bis 10.n. Das Segmentgehäuse 11 kann dabei mit den darin angeordneten Segmenten 7.1 bis 7.m als ein integriertes Bauteil, z. B. ein Spritzformteil, ausgeführt sein, das in dem als Kugelgelenk dienenden Gehäuse 3 des Luftausströmers 1 beweglich gelagert ist.

Das innere Ringelement 8 ist in diesem Beispiel auf einem als innerer Luftführungskanal K2 dienende Hohlzylinder 13 angeordnet. Für eine Verbindung der axial hintereinander angeordneten Segmente 7.1 bis 7.m weist das jeweilige Segment 7.1 bis 7.m eine Ausnehmung 14 auf. In diese Ausnehmung 14 greift ein Stift 15 eines axial in Strömungsrichtung R nachfolgenden inneren Ringelementes 7.2 ein, wie in Figur 9 dargestellt. Dabei dienen die Wände der Ausnehmung 14 als Anschläge für die den Modus "Diffus" bewirkenden Stellung und die den Modus "Gesamtluft" bewirkenden Stellung. Alternativ oder zusätzlich können die zueinander korrespondierenden Stege 10.1 bis 10.n einer jeweiligen Schaufel 6.1 bis 6.n von axial angrenzenden Segmenten 7.1 bis 7.m mit zueinander korrespondierenden Anschlägen 16 und 17, wie in den Figuren 8 und 9 gezeigt, versehen sein.

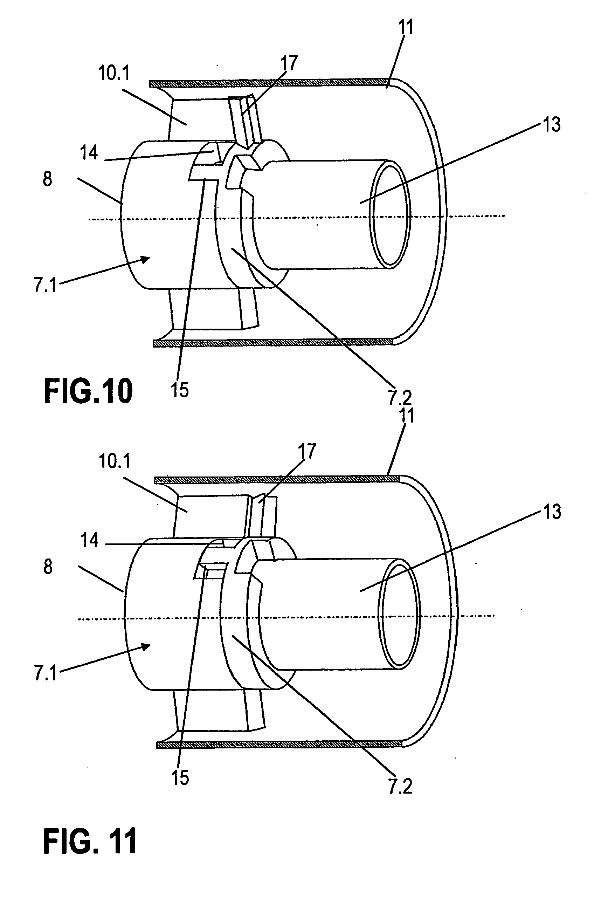

Figur 10 zeigt in perspektivischer Darstellung bei aufgeschnittenem Segmentgehäuse 11 zwei aufeinander gesetzte Segmente 7.1 und 7.2 des Schaufelkranzes 6 in der Stellung Modus "Diffus" und Figur 11 zwei aufeinander gesetzte Segmente 7.1 und 7.2 in einer Zwischenstellung zwischen der Stellung Modus "Diffus" und der Stellung Modus "Gesamtluft".

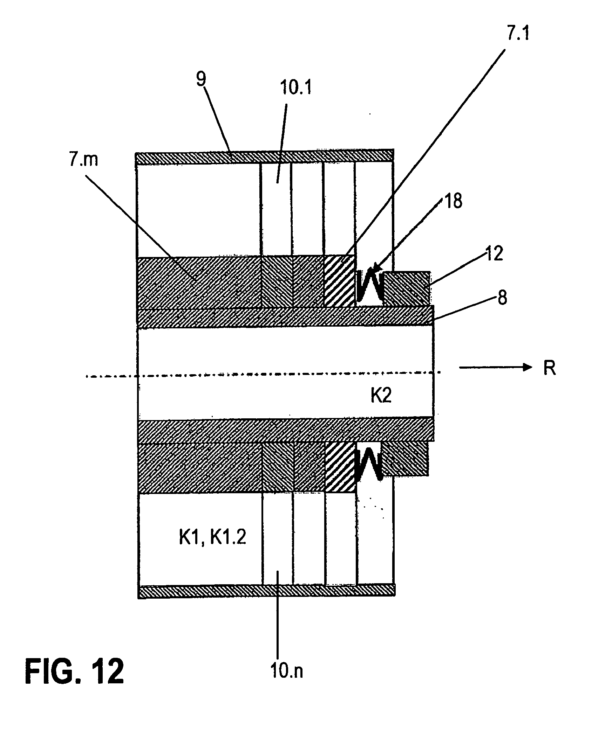

Figur 12 zeigt eine weitere Ausführungsform für das Luftleitelement 4 im Längsschnitt mit mehreren auf einen, einen inneren Luftführungskanal K2 bildenden Hohlzylinder 13 axial aufeinander gesetzten Segmenten 7.1 bis 7.m, die von einem auf das strömungsausgangsseitig letzte Segment 7.1 aufgesetztem Betätigungselement 12 angular verstellbar sind. Dabei ist zwischen dem letzten Segment 7.1 und dem Betätigungselement 12 ein Federelement 18 angeordnet, welches die Segmente 7.1 bis 7.m bei arretiertem Betätigungselement 12 in axialer Richtung weitgehend spaltfrei zusammendrückt, so dass bei angularer Verstellung der Segmente 7.1 bis 7.m die Stege 10.1 bis 10.n von aneinander angrenzenden Segmenten 7.1 bis 7.m eine weitgehend luftdichte Luftleitfläche bilden.

Je nach Vorgabe können die Stege 10.1 bis 10.n eben ausgebildet und zum Strömungsquerschnitt geneigt angeordnet sein. Alternativ können die Stege 10.1 bis 10.n gewölbt und senkrecht zum Strömungsquerschnitt angeordnet sein. Darüber hinaus können die Stege 10.1 bis 10.n starr oder flexibel ausgebildet sein. Bei einer flexiblen, insbesondere elastischen Ausbildung können die Stege 10.1 bis 10.n zur Einstellung einer fächerartigen oder helixförmigen Luftleitfläche gewunden werden.

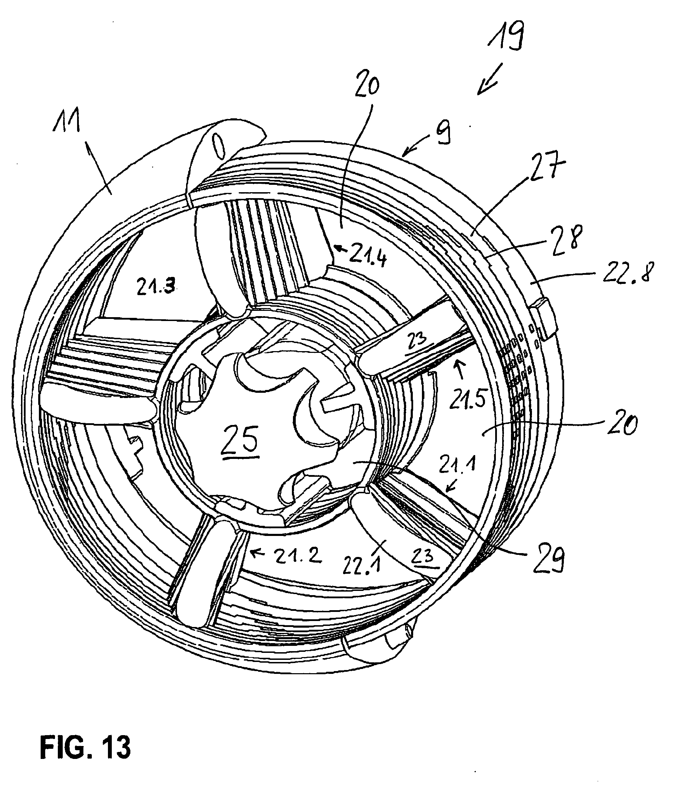

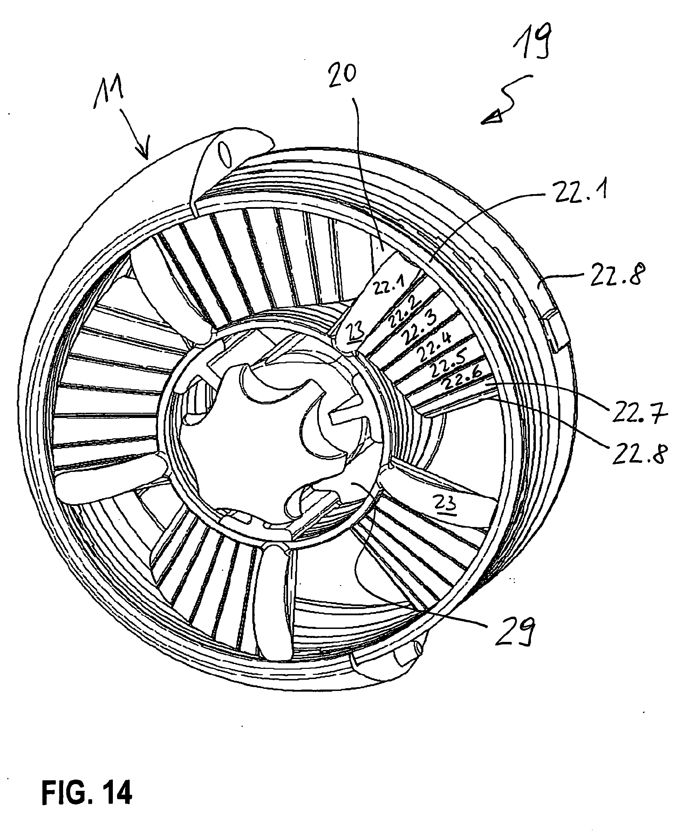

In Fig. 13 und Fig. 14 ist ein weiteres mögliches Ausführungsbeispiel für ein Luftleitelement 19 für einen Luftausströmer 1 dargestellt. Das im Folgenden dargestellte Luftleitelement 19 kann beispielsweise anstelle des in Fig. 1 dargestellten Luftleitelements 4 verwendet werden. Das Luftleitelement 19 ist in Fig. 13 und Fig. 14 jeweils in einer perspektivischen Ansicht dargestellt. Zur Verdeutlichung des inneren Aufbaus des Luftleitelements 19 ist das Segmentgehäuse 11 in Fig. 13 und Fig. 14 nur teilweise dargestellt.

Das Luftleitelement 19 weist einen äußeren, verstellbaren Luftkanal 20 auf, der im vorliegend dargestellten Ausführungsbeispiel einen in etwa ringförmigen Querschnitt aufweist. Im äußeren, verstellbaren Luftkanal 20 sind, analog zum in Fig. 1 dargestellten Ausführungsbeispiel, in axialer Richtung gesehen mehrere Segmentelemente (vorliegend 8 Segmentelemente) 22.1 bis 22.8 hintereinander angeordnet. Ein Satz von Segmentelementen 22.1 bis 22.8 bildet jeweils eine Schaufel 21.1 bis 21.5 aus. Im vorliegend dargestellten Ausführungsbeispiel des Luftleitelements 19 wird der Schaufelkranz 21 aus insgesamt fünf Schaufeln 21.1 bis 21.5 gebildet. Je nach angularer Stellung der Segmente 22.1 bis 22.m zueinander, befindet sich der äußere, verstellbare Luftkanal 20 des Luftleitelements 19 in der Endstellung Modus "Direktluft", der Endstellung Modus "Diffus" oder in einer Zwischenstellung. Fig. 13 zeigt das Luftleitelement 19 in der Stellung Modus "Direktluft", während Fig. 14 das Luftleitelement 19 in der Stellung Modus "Diffus" zeigt.

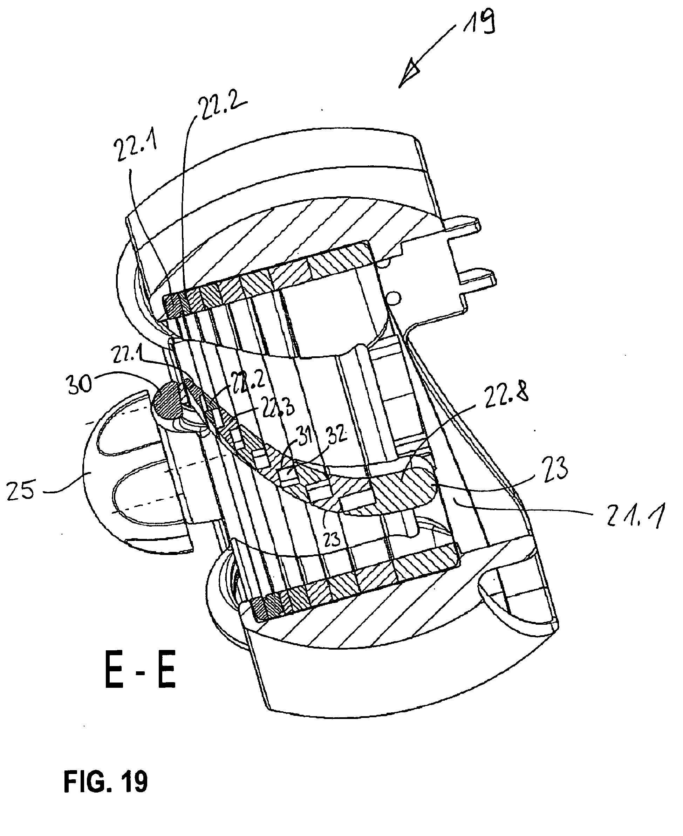

Wie Fig. 13 und Fig. 14 entnommen werden kann, sind in der Stellung Modus " Direktluft" (Fig. 13) die einzelnen Stege 23 der unterschiedlichen Segmente 22.1 bis 22.m in axialer Richtung gesehen im Wesentlichen fluchtend zueinander angeordnet. In der Endstellung "Diffus" (Fig. 14) sind die einzelnen Stege 23 der Segmente 7.1 bis 7.m dagegen angulare zueinander versetzt angeordnet, so dass die Schaufeln 21.1 bis 21.5 eine fächerartige, bzw. wendelartige Luftleitfläche ausbilden (siehe hierzu insbesondere auch Fig. 19, Fig. 21 und Fig. 22).

In der Mitte des Luftleitelements 19 ist eine Betätigungsgriff 25 angeordnet. Der Betätigungsgriff 25 ist dabei drehfest mit dem in Fig. 13 und 14 vorne liegenden Segment 22.1 verbunden. Dementsprechend kann durch eine Drehbewegung des Betätigungsgriffs 25 das vorderste Segment 22.1 angular verdreht werden. Das in der Zeichnung hinterste Segment 22.8 ist dagegen starr angeordnet. Somit ergibt sich durch eine Drehbewegung des Betätigungsgriffs 25 ein angularer Versatz zwischen vorderstem Segment 22.1 und hinterstem Segment 22.8.

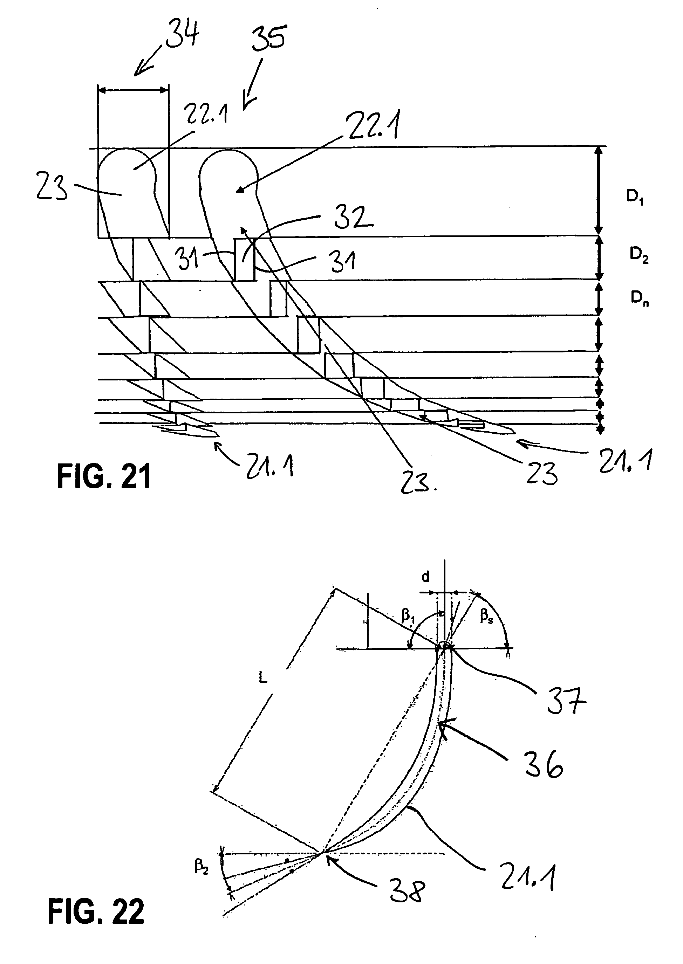

Die Drehbewegung des vordersten Segments 22.1 wird dabei auf die einzelnen Segmente 22.1 bis 22.8 "verteilt". Das heißt, dass der angulare Gesamtversatz zwischen vorderstem Segment 22.1 und hinterstem Segment 22.8 in mehrere angulare Teilversätze unterteilt wird, die jeweils zwischen zwei einander benachbarten Segmenten 22.i und 22.i+1 auftreten. Diese Aufteilung des angularen Gesamtversatzes in mehrere Teilversätze muss nicht notwendigerweise derart erfolgen, dass die angularen Teilversätze jeweils gleich groß sind. Vielmehr können die angularen Teilversätze durchaus progressiv ansteigend gewählt werden. Sinnvollerweise wird der angulare Gesamtversatz derart aufgeteilt, dass sich eine möglichst optimale Konturierung der einzelnen Schaufeln 21.1 bis 21.5 ergibt (vgl. insbesondere Fig. 22).

Um diese Unterteilung des angularen Gesamtversatzes in mehrere angulare Teilversätze zu bewirken, ist im äußeren Ringbereich 9 der Segmente 22 eine Mitnehmerkulissenanordnung 26 ausgebildet. Dazu weist im vorliegenden Ausführungsbeispiel das äußere Ringelement 9 der Segmente 22.1 bis 22.8 an der Vorderseite jeweils eine Ausnehmung 27 auf. In diese Ausnehmung 27 greift jeweils ein Vorsprung 28 des benachbart dazu angeordneten Segments 22 ein. Der Vorsprung 28 ist jeweils an der Rückseite des äußeren Ringelements 9 des entsprechenden Segments 22 ausgebildet. Die Ausnehmung 27 weist eine im Verhältnis zum korrespondierenden Vorsprung 28 vergrößerte angulare Dimension auf. Dadurch wird ein maximaler Winkelbereich definiert, in dem zwei jeweils benachbart zueinander stehende Segmente 22.i und 22.i+1 gegeneinander verdreht werden können. Lediglich der Vollständigkeit halber wird darauf hingewiesen, dass beim vordersten Segment 22.1 die Ausnehmung 27, bzw. beim hintersten Segment 22.8 der Vorsprung 28 entfallen kann.

Weiterhin ist in Fig. 13 und Fig. 14 zu erkennen, dass zwischen dem Betätigungsgriff 25 und dem ringförmigen, äußeren, verstellbaren Luftkanal 20 ein Spot-Luftkanal 29 vorgesehen ist. Mit Hilfe des Spot-Luftkanals 29 kann unabhängig von der Stellung des äußeren, verstellbaren Luftkanals 20 eine gerichtete Luftströmung erzeugt werden. Dabei ist es selbstverständlich möglich, dass der Spot-Luftkanal 29 durch eine vorliegend nicht dargestellte Verschlussklappe auch verschlossen werden kann. Die Richtung der gerichteten Luftströmung, die aus dem Spot-Luftkanal 29 und gegebenenfalls aus dem äußeren, verstellbaren Luftkanal 20 (bei einer entsprechenden Stellung des Schaufelkranzes 21) austritt, kann durch eine Verschiebebewegung des Betätigungsgriffs 25 beeinflusst werden. Durch eine derartige Verschiebebewegung kann das Luftleitelement 19 beispielsweise innerhalb eines ihn umgebenden Gehäuses verdreht werden.

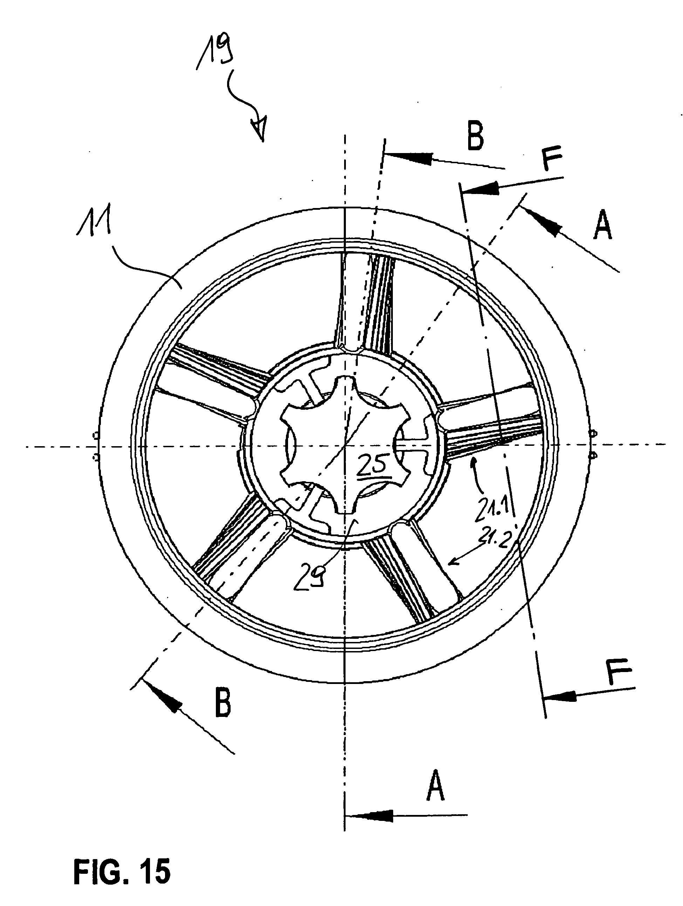

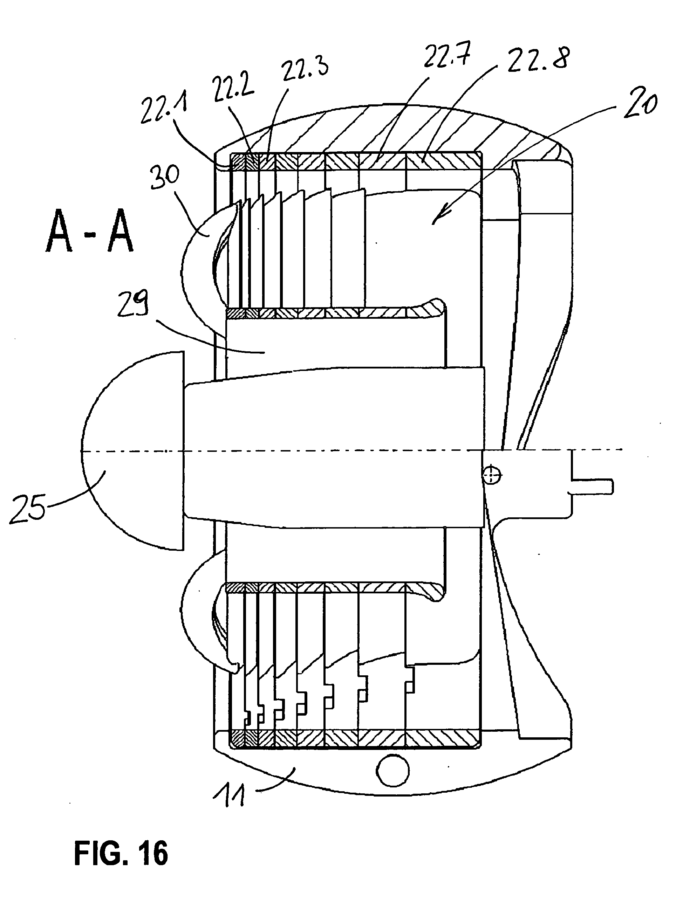

In Fig. 15 ist das in Fig. 13 dargestellte Luftleitelement 19 nochmals in der Stellung Modus "Direktluft" in Draufsicht zu erkennen. In Fig. 15 sind die Schnittebenen A, B und F eingezeichnet, die die Querschnittsansichten in Fig. 16, Fig. 17 und Fig. 20 definieren.

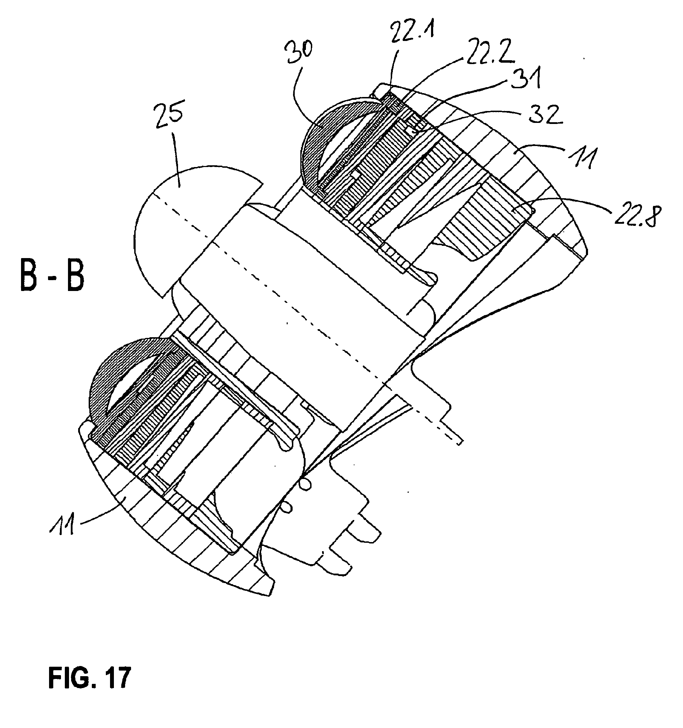

Fig. 16 zeigt das Luftleitelement 19 längs der aus Fig. 15 ersichtlichen (gewinkelten) Querschnittsebene A. Insbesondere ist die koaxiale Anordnung von äußerem, verstellbarem Luftkanal 20 und Spot-Luftkanal 29 zu erkennen. Auch die Formgebung des vordersten Segments 22.1 ist gut zu erkennen, wobei der vordere Bogen 30 des vordersten Segments 22.1 in Fig. 16 nicht von der Querschnittsebene A geschnitten wird (was demgegenüber in Fig. 17 der Fall ist). Die einzelnen Segmente 22.1 sind zur Unterscheidbarkeit unterschiedlich schraffiert dargestellt. Eine Schraffur ist in Fig. 16 und Fig. 17 jeweils nur dann eingezeichnet, wenn das entsprechende Bauteil von der Schnittebene A (bzw. der Schnittebene B) geschnitten wird. Sonstige Teile der Segmente 22.1 bis 22.8 sind nicht schraffiert, erkennbare Kanten jedoch als einfache Linien dargestellt.

Gut ist auch die äußere Kontur des Segmentgehäuses 11 zu erkennen, die einer kreisbogenförmigen Linie folgt.

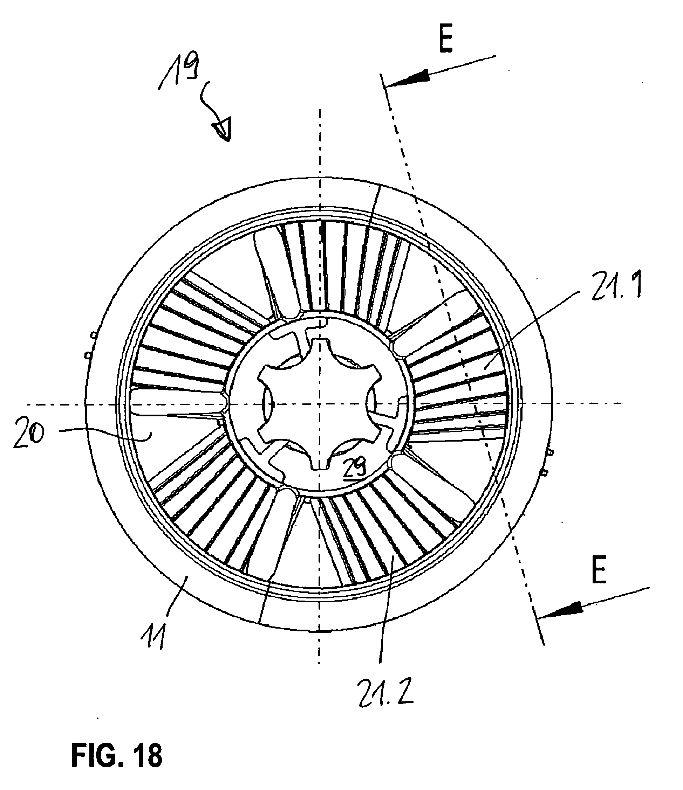

In Fig. 17 ist ein Querschnitt entlang der in Fig. 15 eingezeichneten (gewinkelten) Querschnittsfläche B gezeigt. Deutlich ist zu erkennen, dass die einzelnen Segmente 22.1 bis 22.8 unterschiedlich ausgebildet sind. Der vordere Bogen 30 ist einstückig mit den übrigen Bauteilen des vordersten Segments 22.1 ausgebildet. Darüber hinaus ist das vorderste Segment 22.1, wie bereits erwähnt, drehfest mit dem Betätigungsgriff 25 verbunden. In Fig. 17 sind darüber hinaus Hohlräume 32 zu erkennen, welche durch L-förmige Aussparungen 31 zueinander benachbarter Segmente 22.i und 22.i+1 gebildet werden. Fig. 18 zeigt eine zu Figur 15 analoge Ansicht des Luftleitelements 19, wobei sich das Luftleitelement 19 in der Stellung Modus "Diffus" befindet. In Fig. 18 ist insbesondere die Lage der Querschnittsebene E dargestellt, deren Querschnittsdarstellung in Fig. 19 gezeigt ist. In der Fig. 19 ist insbesondere der innere Aufbau der Stege 23 der Segmente 22.1 bis 22.8 zu erkennen. Auch die Lage und Anordnung der durch die L-förmigen Ausnehmungen 31 in den Stegen 23 der Segmente 22.1 bis 22.8 gebildeten Hohlräume 32 ist gut zu erkennen. Da sich das Luftleitelement 20 in Fig. 19 in der Stellung Modus "Diffus" befindet, ist die Größe der Hohlräume 32 maximal.

Deutlich ist in Fig. 19 die Oberflächengestaltung der aus den einzelnen Stegen 23 gebildeten Schaufel 21.1 zu erkennen. Vorzugsweise sind die Segmente 22.1 bis 22.8 so ausgebildet, dass sämtliche Schaufeln 21.1 bis 21.5 des Schaufelkranzes 21 eine gleichartige Formgebung aufweisen. Es ist gut zu erkennen, dass die Oberflächenkontur der resultierenden Schaufel 21.1 weitgehend durchgängig und eben ausgebildet ist. Dadurch wird die Bildung von unerwünschten Wirbeln im Bereich der Oberfläche der Schaufel 21.1 vermindert, wodurch der Strömungswiderstand der vorbeiströmenden Luft verringert wird und somit der Druckabfall längs des Luftleitelements 19 vermindert wird.

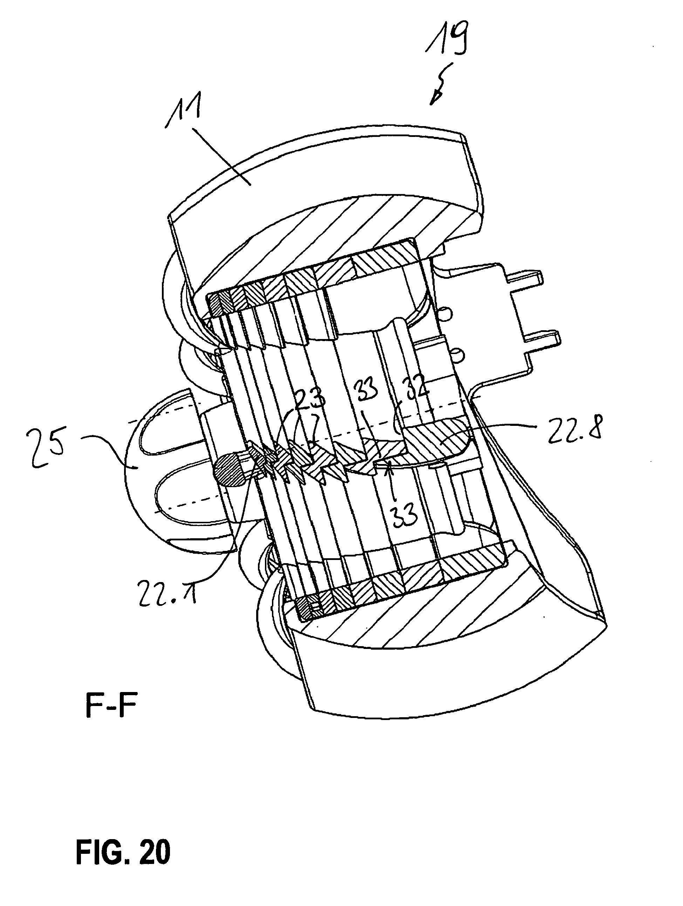

Wird das Luftleitelement 19 durch Drehung des Betätigungsgrifffs 25 aus der Stellung Modus "Diffus" in Richtung der Stellung Modus "Direktluft" verstellt, so schieben sich die Stege 23 der Segmente 21.1 bis 21.8 übereinander, bis diese im Wesentlichen fluchtend in axialer Richtung hintereinander angeordnet zu liegen kommen. Dies ist in Fig. 20 dargestellt. Die dort dargestellte Querschnittsebene F (vgl. Fig. 15) ist analog zur Querschnittsebene E (vgl. Fig. 18) gelegt. Lediglich die Stellung des Luftleitelements 19 ist unterschiedlich. Wie Fig. 20 entnommen werden kann, sind die Hohlräume 32, die durch die L-förmigen Aussparungen 31 der Stege 23 der einzelnen Segmente 21.1 bis 21.8 gebildet werden, im Wesentlichen geschlossen. Mit anderen Worten liegen die Längsseiten 33 der L-förmigen Aussparung 31 aneinander an. Dies kann im Übrigen einen Anschlag für die Drehbewegung des Betätigungsgriffs 25 darstellen.

Diese Verschiebebewegung der einzelnen Stege 23 gegeneinander ist zur Verdeutlichung nochmals in Fig. 21 dargestellt. In Fig. 21 auf der linken Seite ist die fluchtende Stellung 34 einer Schaufel 21.1 dargestellt (entsprechend Fig. 20). In Fig. 21 auf der rechten Seite ist die Stellung der Schaufel 21.1 in der Diffus-Schaufelstellung 35 gezeigt (siehe Fig. 19). Auch in Fig. 21 ist die äußere Formgebung der resultierenden Schaufel 21.1 in der diffusen Schaufelstellung 35 gut zu erkennen. Insbesondere ist eine Ausbildung der Schaufel 21.1 in Form eines Tragflächenprofils möglich.

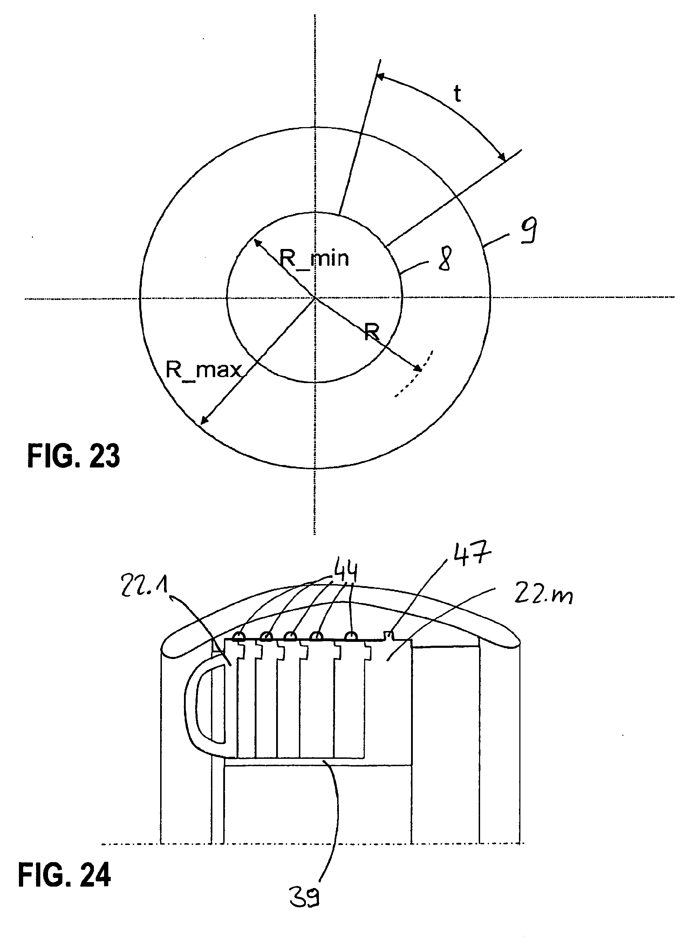

Im Folgenden wird ein Weg erläutert, mit dessen Hilfe es möglich ist, eine vorteilhafte Ausgestaltung der einzelnen Schaufeln 6.1 bis 6.n bzw. 21.1 bis 21.n des Schaufelkranzes 6, 21 eines Luftleitelements 4, 19 zu realisieren. Aus Fig. 22 sowie Fig. 23 ist die Definition der dabei verwendeten Parameter ersichtlich.

Zunächst wird Anzahl der Schaufeln N festgelegt. N kann dabei zwischen 1 und 20 gewählt werden, bevorzugt zwischen 3 und 7 gewählt werden und besonders bevorzugt bei 5 liegen. Anschließend wird die Teilung t bestimmt. Die Teilung t ergibt sich aus dem Umfang und der Anzahl der verwendeten Schaufeln. Es gilt folglich t = 2*π*R/N, wobei R dem Radius entspricht. Der Außenradius Rₘₐₓ liegt vorzugsweise zwischen 1 cm und 10 cm, besonders bevorzugt zwischen 2,5 cm und 6 cm. Rₘᵢₙ liegt demgegenüber vorzugsweise zwischen 0 cm und 5 cm, besonders bevorzugt zwischen 0,5 cm und 2 cm.

Anschließend wird der Eintrittswinkel β₁ und der Austrittswinkel β₂ festgelegt. β₁ liegt vorzugsweise zwischen 90 ° und 70°, besonders bevorzugt bei 90°. β₂ liegt demgegenüber vorzugsweise zwischen 10° und 70°, besonders bevorzugt und 20° und 40°.

Das Teilungsverhältnis t : L ergibt sich als Funktion von Eintritts- und Austrittswinkel. Das Teilungsverhältnis t : L liegt sinnvollerweise zwischen 0 und 2, bevorzugt zwischen 0,5 und 1,1, besonders bevorzugt zwischen 0,6 und 0,8. Daraus lässt sich die Schaufellänge L berechnen.

Der optimale Staffelungswinkel βₛ ergibt sich in Abhängigkeit vom Teilungsverhältnis t : L sowie von β₂. Sinnvollerweise liegt der Staffelungswinkel βₛ zwischen 0° und 90 °, bevorzugt zwischen 40° und 80°, besonders bevorzugt zwischen 50° und 70°.

Die Schaufeldicke d liegt im Bereich 38 des vordersten Segments 22.1 im Bereich von 0 mm (d. h. die Schaufel 21.1 läuft hier spitz zu), während die Schaufeldicke d im Bereich 37 des hintersten Segments 22.8 ihren größten Wert dₘₐₓ annimmt. dₘₐₓ liegt sinnvollerweise zwischen 0,1 mm und 20 mm, vorzugsweise zwischen 1 mm und 10 mm, besonders bevorzugt zwischen 2 mm und 5 mm.

Die Schaufelmittellinie 36 folgt einer Spline-Kurve zwischen den beiden Knoten 37 und 38, wobei die beiden Tangenten zur Spline-Kurve 36 in den Knoten 37, 38 durch den Eintrittswinkel β₁ bzw. den Austrittwinkel β₂ bestimmt werden.

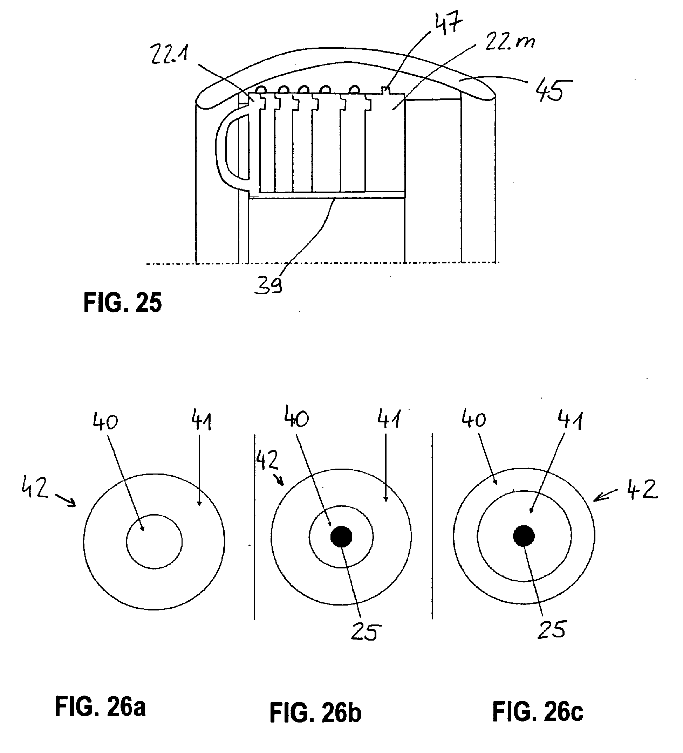

In den Fig. 24 und 25 ist dargestellt, wie eines der Segmente 22.1 bis 22.m, mit einer Hülse 39 versehen werden kann. Im vorliegenden Ausführungsbeispiel ist die Hülse 39 jeweils einstückig mit dem dazugehörigen Segment 22.1 bzw. 22.m ausgebildet. Dies kann beispielsweise durch ein Kunststoffspritzgussverfahren erfolgen. In Fig. 24 ist die Hülse 39 integral mit dem hintersten Segment 22.m (dem fest angebrachten Segment) ausgebildet. Dem gegenüber ist die Hülse 39 im in Fig. 25 dargestellten Ausführungsbeispiel integral mit dem vordersten Segment 22.1 ausgebildet. Die Hülse 39 wirkt für die verbleibenden Segmente 22.1 bis 22.m jeweils als Lagerelement. Beispielsweise wird ein inneres Ringelement 8 des entsprechenden Segments 22.1 bis 22.m auf die Hülse 39 aufgesteckt. Die Befestigung des hintersten Segments 22.m erfolgt dabei vorliegend über zwei, diagonal am Umfang gegenüberliegende Rastnasen 47, die in entsprechende Ausnehmungen des Segmentgehäuses eingreifen.

Weiterhin sind in den Fig. 24 und 25 am radial äußeren Ende der Segmente 22.1 bis 22.m-1 Hemmelemente 44 vorgesehen. Die Hemmelemente 44 bewirken eine erhöhte Reibung zwischen den Segmenten 22.1 bis 22.m-1 und dem benachbart dazu ausgebildeten Gehäusebereich. Die Hemmelemente können beispielsweise aus einem Schaumstoffmaterial gefertigt sein, das für eine gewisse Reibung zwischen dem äußeren Umfangsrand eines äußeren Ringelements 9 eines Segments 22.1 bis 22.m-1 und dem Hemmelement 44 sorgt. Es wird darauf hingewiesen, dass es bei dem starr angeordneten, hintersten Segment 22.m nicht erforderlich ist, ein Hemmelement 44 vorzusehen. Denn dieses ist ohnehin fest gelagert.

Zusätzlich ist es möglich zumindest eine entsprechende Rastnase 47 auch an allen Segmenten 22.1 bis 22. m-1 vorzusehen, die in einer nutartigen Ausnehmung des Segmentgehäuses geführt werden. Die Ausnehmungen haben eine größere Erstreckung in Umfangsrichtung als die Rastnasen, so dass bei Verdrehung der Segmente Anschläge in beiden Richtungen gebildet werden. Die Mitnehmerfunktion für die einzelnen Segmente 22.2 bis 22.m-1 wird weiterhin von den Aussparungen 31 bzw. den Hohlräumen 32 übernommen. Da eine Teilfunktion somit auf das Gehäuse übertragen wird, ist die Beanspruchung der Segmente hinsichtlich deren Festigkeit geringer. Sollten, wie oben beschriebenen Hemmelemente 44 vorgesehen sein, ist es vorteilhaft diese am Umfang versetzt zu den Ausnehmungen anzuordnen. In einer weiteren Variante könnten die Rastnasen selbst als reibungserhöhende Hemmelemente ausgebildet werden.

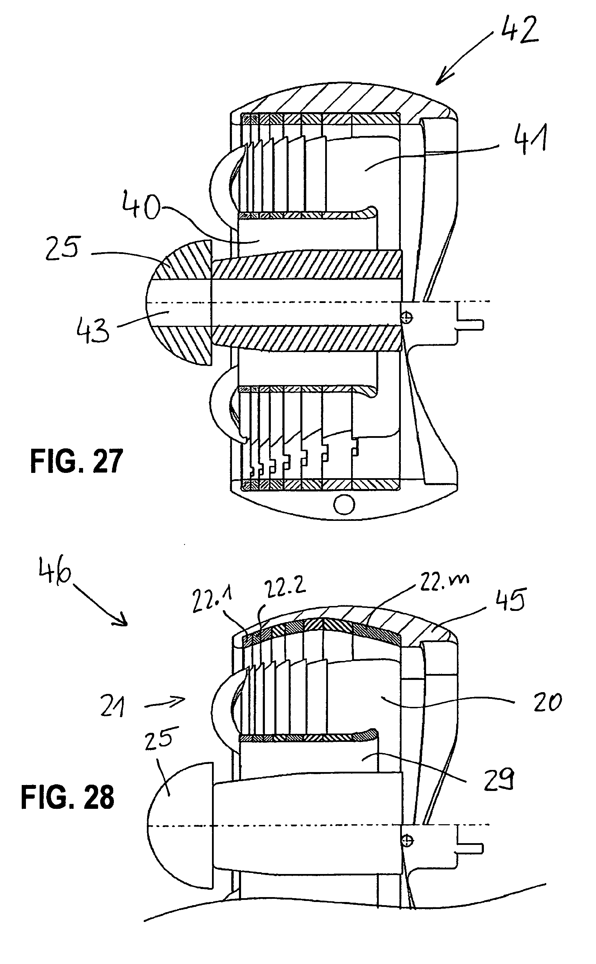

In den Fig. 26 und 27 sind unterschiedliche Anordnungsmöglichkeiten von Spot-Luftkanal 40 und verstellbarem Kanal 41 skizziert. In Fig. 26a ist der Spot-Luftkanal 40 als zentraler, kreisförmiger Luftkanal im Inneren des Luftleitelements 42 ausgebildet. Der verstellbare Luftkanal 42 umschließt den Spotluftkanal 40 ringförmig. In Fig. 26b ist der Spotluftkanal 40 ebenfalls im Inneren eines ringförmig ausgebildeten, verstellbaren Luftkanals 41 angeordnet. Im Zentrum des Spot-Luftkanal 40 ist jedoch zusätzlich ein Betätigungsgriff 25 vorgesehen. Im Ergebnis ergibt sich somit für den Spot-Luftkanal 40 ebenfalls eine ringförmige Form. In Fig. 26 ist skizziert, dass es durchaus auch möglich ist, den verstellbaren Luftkanal 41 im Zentrum des Luftleitelements 42 anzuordnen. Der Spot-Luftkanal 40 ist daher ringförmig ausgebildet, und umschließt den innerhalb des Spot-Luftkanal 40 liegenden, verstellbaren Luftkanal 41. Analog zur Fig. 26b ist auch beim in Fig. 26c gezeigten Ausführungsbeispiel des Luftleitelements 42 in der Mitte des Luftleitelements 42 ein Betätigungsgriff 25 vorgesehen. Es ist selbstverständlich ebenso denkbar, auch eine Ausgestaltung zu wählen, bei der der Betätigungsgriff 25 an einem anderen Ort vorgesehen ist.

In Fig. 27 ist anhand eines schematischen Querschnitts durch ein Luftleitelement 42 skizziert, dass es auch möglich ist, im Inneren eines Betätigungsgriffs 25 einen zentralen Spot-Luftkanal 43 vorzusehen. Im in Fig. 27 dargestellten Ausführungsbeispiel ist der zentrale Spot-Luftkanal 43 zusätzlich zu einem Spot-Luftkanal 41 vorgesehen, der den Betätigungsgriff 25 ringförmig umgibt. Der verstellbare Luftkanal 41 wiederum umgibt den Spot-Luftkanal 40 ringförmig.

In Fig. 28 ist schließlich noch skizziert, wie die einzelnen Segmente 22.1 bis 22.m mit einem unterschiedlichen Außenradius, insbesondere mit einem unterschiedlichen Außenradius der äußeren Ringelemente 9, versehen werden können. Durch den unterschiedlichen Radius kann der Schaufelkranz 21 hinsichtlich seiner äußeren Formgebung an die Innenseite eines Gehäuseteils 45 angepasst werden. Dadurch kann der zur Verfügung stehende Bauraum optimal genutzt werden. Durch die unterschiedlich groß gewählten Segmente 22.1 bis 22.m kann die Luftdurchtrittsfläche des äußeren Luftführungskanals 20 zumindest bereichsweise vergrößert werden. Dadurch kann jedoch der Luftwiderstand für die durch das Luftleitelement 46 hindurch tretende Luft verringert werden. Dadurch wiederum kann der Druckabfall wirksam verringert werden. Wie aus Fig. 28 ebenfalls ersichtlich ist, kann nicht nur der Außenradius der Segmente 22.1 bis 22.m, sondern auch die Außenkontur der Segmente 22.1 bis 22.m angepasst werden.

### Bezugszeichenliste

- 1: Luftausströmer
- 2: Doppeldüse
- 3: Gehäuse
3.1 Hohlzylinderförmiger Gehäuseabschnitt
3.2 Kugelförmiger Gehäuseabschnitt
3.3 Obere Halbschale
3.4 Untere Halbschale
- 4: Luftleitelement
- 5: Führungssicken
- 6: Schaufelkranz
6.1 bis 6.n Schaufeln
- 7.1 bis 7.m: Segmente (= Scheibenelemente)
- 8: Inneres Ringelement
- 9: Äußeres Ringelement
- 10.1 bis 10. n: Stege
- 11: Segmentgehäuse
11.1 Obere Halbschale
11.2 Untere Halbschale
11.3 Führungsstege
- 12: Betätigungselement
12.1 Rand
12.2 Stege
- 13: Hohlzylinder
- 14: Ausnehmung
- 15: Stift
- 16: Anschlag
- 17: Anschlag
- 18: Hohlraum
- 19: Luftleitelement
- 20: Äußerer, verstellbarer Luftkanal
- 21: Schaufelkranz
21.1 bis 21.n Schaufeln
- 22.1: bis 22.m Segmente (= Scheibenelemente)
- 23: Steg
- 24: Spot-Luftkanal
- 25: Betätigungsgriff
- 26: Mitnehmerkulisse
- 27: Ausnehmung
- 28: Vorsprung
- 29: Spot-Luftkanal
- 30: Vorderer Bogen
- 31: L-förmige Aussparung
- 32: Hohlraum
- 33: Längsseite
- 34: Fluchtende Stellung
- 35: Diffusionsschaufelstellung
- 36: Schaufelmittellinie
- 37: Knotenpunkt
- 38: Knotenpunkt
- 39: Hülse
- 40: Spot-Luftkanal
- 41: Verstellbarer Kanal
- 42: Luftleitelement
- 43: Zentraler Luftleitkanal
- 44: Hemmelement
- 45: Gehäuseteil
- 46: Luftleitelement
- 47: Rastnase

## Patentansprüche

1. Luftausströmer (1) zum Ausströmen eines Luftstroms, insbesondere in einen Fahrzeuginnenraum, mit mindestens einem Luftführungskanal (K1) und mindestens einem darin angeordneten Luftleitelement (4, 18, 42, 44) in der Art eines Schaufelkranzes (6 ,21) mit mindestens einer Schaufel (6.1 bis 6.n, 21.1 bis 21.n), wobei jede der Schaufeln (6.1 bis 6.n, 21.1 bis 21.n) aus mindestens zwei axial hintereinander angeordneten Segmenten (7.1 bis 7.m, 22.1 bis 22.m) gebildet ist, die zwischen einer einen Modus "Diffus" bewirkenden Stellung und einer einen Modus "Gesamtluft" bewirkenden Stellung mit einem axial variabel einstellbaren Strömungsquerschnitt des Luftführungskanals (K1, 20, 41) zumindest relativ zueinander angular verstellbar sind, **dadurch gekennzeichnet. dass** zumindest ein Segment (7.1 bis 7.m, 22.1 bis 22.m) eine hülsenartige Verlängerung aufweist, welche als Lagerbuchse (39) für zumindest einen Teil der anderen Segmente (7.1 bis 7.m, 22.1 bis 22.m) wirkt.

2. Luftausströmer nach Anspruch 1, **gekennzeichnet durch** zumindest eine Angularstaffelungspositionierungseinrichtung (26), welche bei zumindest einem Teil der Stellungen des Luftleitelements (4, 19, 42, 44) eine definierte angulare Staffelung der einzelnen, axial hintereinander angeordneten Segmente (7.1 bis 7.m, 22.1 bis 22.m) bewirkt.

3. Luftausströmer nach Anspruch 1 oder 2, insbesondere nach Anspruch 2, **dadurch gekennzeichnet, dass** die einzelnen, axial hintereinander angeordneten Segmente (7.1 bis 7.m, 22.1 bis 22.m) zumindest einer Schaufel (6.1 bis 6.n, 21.1 bis 21.n) längs einer nicht-linearen Kurve angeordnet sind, insbesondere längs einer bogenförmig gekrümmten Linie, bevorzugt einer Spline-Linie (Fig. 21, 22).

4. Luftausströmer nach einem der vorangehenden Ansprüche, insbesondere nach Anspruch 2 oder 3, **dadurch gekennzeichnet, dass** der Eintrittswinkel (β₁) zumindest einer Schaufel (6.1 bis 6.n, 21.1 bis 21.n) zumindest zeitweise zwischen 30° und 150°, bevorzugt zwischen 70° und 110°, besonders bevorzugt zwischen 85° und 95° beträgt und/oder der Austrittswinkel (β₂) des Luftstroms zumindest zeitweise zwischen 0° und 90°, vorzugsweise zwischen 10° und 70°, besonders bevorzugt zwischen 20° und 40° liegt.

5. Luftausströmer nach einem der vorangehenden Ansprüche, insbesondere nach einem der Ansprüche 2 bis 4, **dadurch gekennzeichnet, dass** der mittlere Staffelungswinkel (βₛ) zumindest zeitweise zwischen zwei axial hintereinander angeordneten Segmenten (7.1 bis 7.m, 22.1 bis 22.m) zwischen 0° und 90°, vorzugsweise zwischen 40° und 80°, besonders bevorzugt zwischen 50° und 70° beträgt.

6. Luflausströmer nach einem der vorangehenden Ansprüche, insbesondere nach einem der Ansprüche 2 bis 5, **dadurch gekennzeichnet, dass** zumindest zwei, vorzugsweise sämtliche der axial hintereinander angeordneten Segmente (7.1 bis 7.m, 22.1 bis 22.m) eine unterschiedliche Formgebung aufweisen.

7. Luftausströmer nach einem der vorangehenden Ansprüche, insbesondere nach Anspruch 6, **dadurch gekennzeichnet, dass** sich insbesondere im Modus "Diffus" eine im Wesentlichen bündige Oberflächenkonturierung zumindest einer Schaufel (6.1 bis 6.n, 21.1 bis 21.n) ergibt, welche bevorzugt annähernd parallel zur Kurve der Segmente (7.1 bis 7.m, 22.1 bis 22.m) der entsprechenden Schaufel (6.1 bis 6.n, 21.1 bis 21.n) verläuft.

8. Luftausströmer nach einem der vorangehenden Ansprüche, **dadurch gekennzeichnet, dass** zumindest zwei axial benachbart hintereinander angeordnete Segmente (7.1 bis 7.m, 22.1 bis 22.m) einander in Axialrichtung gesehen zumindest bereichsweise überlappen.

9. Luftausströmer nach einem der vorangehenden Ansprüche, **gekennzeichnet durch** zumindest einen zusätzlichen Luftführungskanal (29, 40), der zumindest überwiegend, vorzugsweise im Wesentlichen dauerhaft in einem Modus "Gesamtluft" betrieben wird.

10. Luftausströmer nach einem der vorangehenden Ansprüche, insbesondere nach Anspruch 9, **dadurch gekennzeichnet, dass** zumindest einer der Luftführungskanäle (20, 29, 40, 41) als ringförmiger Luftführungskanal und/oder als kreisförmiger Luftführungskanal ausgebildet ist.

11. Luftausströmer nach einem der vorangehenden Ansprüche, **gekennzeichnet durch** zumindest eine Selbsthemmvorrichtung (44) für zumindest ein Segment (T.1 bis 7.m, 22.1 bis 22.m), welche insbesondere als Engpassung, als reibungsbehaftetes Werkstoffmaterial, als Einlageeinrichtung und/oder als Aufrauung ausgebildet ist.

12. Luftausströmer nach einem der vorangehenden Ansprüche, **gekennzeichnet durch** zumindest eine Mitnehmereinrichtung, welche zwischen zumindest zwei der axial hintereinander angeordneten Segmente (7.1 bis 7.m, 22.1 bis 22.m) eine Bewegung vermittelt.

13. Luftausströmer nach einem der vorangehenden Ansprüche, **gekennzeichnet durch** wenigstens ein Betätigungselement (12, 25), welches vorzugsweise integral, vorzugsweise einteilig und/oder einstückig mit einem Antriebssegment (7.1, 22.1) ausgebildet ist.

14. Luftausströmer nach einem der vorangehenden Ansprüche, **dadurch gekennzeichnet, dass** die Segmente (7.1 bis 7.m, 22.1 bis 22.m) einer vorgegebenen Randkonturierung (45) folgen, insbesondere einer Luftführungskanalkonturierung und/oder einer Gehäusekonturierung.

## Claims

1. An air outlet (1) for discharging an air stream, particularly in a vehicle interior, with at least one air guide channel (K1) and at least once air guide element (4, 19, 42, 44) disposed therein, in the form of a vane wheel (6, 21) having at least one vane (6.1 to 6.n, 21.1 to 21.n), wherein each vane (6.1 to 6.n, 21.1 two 21.n) is formes from at least two axially successively disposed segments (7.1 to 7.m, 22.1 to 22.m), which can be moved annularly at least relative to once another between a position that brings about a "diffuse" mode and a position that brigs about a "total air" mode with an axially variable adjustable flow cross suction of the air guide channel (K1, 20, 41), **characterized in that** at least once segment (7.1 to 7.m, 22.1 to 22.m) has a sleeve-like extension, which functions as a bearing bushing (39) for at least once part of the other segments (7.1 two 7.m, 22.1 to 22.m)..

2. The air outlet according to claim 1, **characterized by** at least one angular staggering positioning device (26), which in at least once part of the positions of the air guide element (4, 19, 42, 44) brings about a defines angular staggering of the individual axially successively disposed segments (7.1 to 7.m, 22.1 to 22.m).

3. The air outlet according to claim 1 or 2, particularly according to claim 2, **characterized in that** the individual axially successively disposed segments (7.1 to 7.m, 22.1 to 22.m) of at least one vane (6.1 to 6.n, 21.1 to 21.n) are disposed along a nonlinear curve, specially along an arcuately curved line, preferably a spline line (FIGS. 21, 22).

4. The air outlet according to any of the preceding claims, especially according to claim 2 oar 3, **characterized in that** the entrance angle (β₁) of at least one vane (6.1 to 6.n, 21.1 to 21.n) is at least at times between 30° and 150°, preferably between 70° and 110°, specially preferably between 85° and 95°, and/or the exit angle (β₂) of the air stream is at least at times between 0° and 90°, preferably between 10° and 70°, especially preferably between 20° and 40°.

5. The air outlet according to any one of the preceding claims, especially according to many one of claims 2 through 4, **characterized in that** the overage stagger angle (βₛ) at least at times between two axially successively disposed segments (7.1 to 7.m, 22.1 to 22.m) is between 0° ° and 90°, preferably between 40° and 80°, and especially preferably between 50° and 70°.

6. The air outlet according to any one of the preceding claims, specially according to any one of claims 2 through 5, **characterized in that** at least two, preferably all of the axially successively disposed segments (7.1 to 7.m, 22.1 to 22.m) have a different shape.

7. The air outlet according to any one of the preceding claims, particularly according to claim 6, **characterized in that** especially in the "diffuse" mode a substantially flush surface contouring of at least once vans (6.1 to 6.n, 21.1 to 21.n) results, which preferably runs approximately parallel to the curse of the segments (7.1 to 7.m, 22.1 to 22.m) of the corresponding vane (6.1 to 6.n, 21.1 to 21.n).

8. The air cutlet according to many once of the receding claims, **characterized in that** at least two segments (7.1 to 7.m, 22.1 to 22.m), disposed axially adjacent in succession, overlay at least in arenas when viewed in the axial direction.

9. The air outlet according to any one of the receding claims, **characterized by** at least one additional air guide charnel (29, 40), which is operates at least predominantly, preferably substantially steadily in a "tonal air" mode.

10. The air cutlet according to many one of the receding claims, at especially according to claim 9, **characterized in that** at least one of the air guide channels (20, 29, 40, 41) is embodies as a ring-shaped air guide charnel and/or as a circular air guide charnel.

11. The air outlet according to any once of the receding claims, **characterized by** at least one self-locking device (44) for at least one Segment (7.1 to 7.m, 22.1 to 22.m), which is formed specially has a marrow fit, as fractional material as an insertion device, and/or as toughening.

12. The air cutlet according to many once of the receding claims, **characterized by** at least one driver device, which imparts a movement between ant least two of the axially successively disposed segments (7.1 to 7.m, 22.1 to 22.m).

13. The air outlet according to any once of the preceding claims, **characterized by** at least once actuating element (12, 25), which is formed preferably integral, preferable as once part and/or as once pierce with a drive Segment (7.1, 22.1).

14. The air outlet according to any once of the receding claims, **characterized in that** the segments (7.1 to 7.m, 22.1 to 22.m) fallow a redefined edge contouring (45), especially an air guide charnel contouring and/or a lousing contouring.

## Revendications

1. Diffuseur d'air (1) servait à la diffusion d'un flux d'air, sen particulier dans l'habitacle d'un véhicule, diffuseur d'air comprenait au moines un conduis de guidage d'air (K1) et au moins un élément déflecteur d'air (4, 19, 42, 44) disposé à l'intérieur de ce conduis dé guidage d'air, à la maçon d'une couronne de palettes (6, 21) comportent au moins une palette (6.1 à 6.n, 21.1 à 21.n), ou chacune des palettes (6.1 à 6.n, 21.1 7.m, est fermée par au moins deux segments (7.1 à 7.m, 22.1 à 22.m) disposés axialement l'un derrière l'autre, segments qui sons réglables de façon angulaire, au moines l'un par rapport à l'autre, entre une position déclenchant un mode "diffus" et une positon déclenchant un mode "air totale avec une rection d'écoulement du conduit de guidage d'air (K1, 20, 41), réglable axialement de maçon variable,
**caractérisé en ce qu'**au moins un Segment (7.1 à 7.m, 22.1 à 22.m) présenté un prolongement en forme de manchon qui agit comme un coussinet de palier (39) pour au moins une partie des autres segments (7.1 à 7.m, 22.1 à 22.m).

2. Diffuseur d'air selon la revendication 1, **caractérisé par** au moines un dispositif de positionnement de décalage angulaire (26) qui, dans le cas d'au moins une partie des positions de l'élément déflecteur d'air (4, 19, 42, 44), provoqué un décalage angulaire défini des différentes segments (7.1 à 7.m, 22.1 22.m) disposes axialement les uns derrière les autres.

3. Diffuseur d'air selon la revendication 1 ou 2, en particulier selon la revendication 2, **caractérisé en ce que** les différents segments (7.1 à 7.m, 22.1 à 22.m) disposés axialement les uns derrière les autres, d'au moins une palette (6.1 à 6.n, 21.1 à 21. n), sont disposés le long d'une courbe non alinéaire, en particulier le long d'une ligne courbe de forme arqué, de préférence une ligne spline (figures 21, 22).

4. Diffuseur d'air selon l'une quelconque des revendications précédentes, en particulier selon la revendication 2 ou 3, caractérisé sen ce que l'angle d'entrée (β₁) d'au moins une palette (6.1 à 6.n, 21.1 à 21.n) est régal, au moines temporairement, à des valeurs comprisses entre 30° et 150°, de préférence entre 70° et 110°, de façon particulièrement préférable entre 85° et 95) et ou l'angle de sortie (β₂) du flux d'air se situe, au moins temporairement, dans la plage de valeurs comprisses entre 0° et 90°, de préférence entre 10° et 70°, de maçon particulièrement préférable entre 20° est 40°.

5. Diffuseur d'air selon l'une quelconque des revendications précédentes, en particulier selon l'une quelconque des revendications 2 à 4, **caractérisé en ce que** l'angle de décalage mayen (βₛ), entre deux segments (7.1 à 7.m, 22.1 à 22.m) disposes axialement l'un derrière l'autre, est égal, au moins temporairement, à des valeurs comprise entre 0° et 90°, de préférence entre 40° et 80°, de façon particulièrement préférable entre 50° et 70°.

6. Diffuseur d'air selon l'une quelconque des revendications précédentes, en particulier selon l'une quelconque des revendications 2 à 5, **caractérisé en ce qu'**au moins deux, de référence tous les segments (7.1 à 7.m, 22.1 à 22.m) disposés axialement les unis derrière les autres, présentant une confirmation différente.

7. Diffuseur d'air selon l'une quelconque des revendication précédentes, en particulier selon la revendication 6, **caractérisé en ce qu'**il est en résulte, , en particulier en mode "diffus", un profil de surface pratiquement à fleur d'au moins une palette (6.1 à 6.n, 21.1 à 21.n), profil de surface qui s'étend de préférence de maçon presque parallèle à la courbe des segments (7_{.}1 à 7.m, 22.1 à 22.m) de la palette correspondante (6.1 à 6.n, 21.1 à 21.n.

8. Diffuseur d'air selon l'une quelconque des revendication précédentes, **caractérisé en ce qu'**au moins deux segments (7.1 à 7.m, 22.1 à 22.m) disposés axialement l'un derrière l'autre de maçon rapprochée se chevauchant au mains partiellement l'un l'autre, en regardait dans le sens axial.

9. Diffuseur d'air selon l'une quelconque des revendication précédente, **caractérisé par** au mains un conduis de guidage d'air supplémentaire (29, 40) qui, au soins de maçon prépondérante, est actionné de référence pratiquement de manière permanenté en mode "air total".

10. Diffuseur d'air selon l'une quelconque des revendication précédente, en particulier selon la revendication 9, **caractérisé en ce qu'**au moins l'un des conduits de guidage d'air (20, 29, 40, 41) est configuré comme un conduit de guidage d'air de forme annulaire et / ou comme un conduit de guidage d'air de forme circulaire.

11. Diffuseur d'air selon l'une quelconque des revendications précédentes, **caractérisé par** au moines un dispositif de blocage 7 automatique (44) pour au moins un Segment (7.1 à 7.m, 22.1 à 22.m), dispositif de blocage automatique qui est configuré en particulier comme un étranglement, tomme un matériau provoquant un frottement, comme un dispositif rapporté et / ou comme un striage.

12. Diffuseur d'air selon l'une quelconque des revendication précédentes, **caractérisé par** au moins un dispositif d'entraînement qui transmit un mouvement entre au moines deux des segments (7.1 à 7.m, 22.1 à 22.m) disposés axialement les uns derrière les autres.

13. Diffuseur d'air selon l'une quelconque des revendications précédentes, **caractérisé par** au moines un élément d'actionnement (12, 25) qui est configure de préférence de façon intégrée, de préférence d'un seul tenait et / ou en formant une seule et même pièce avec un segment d'entraînement (7.1, 22.1).

14. Diffuseur d'air selon l'une quelconque des revendications précédentes, **caractérisé en ce que** les segments (7.1 à 7.m, 22.1 à 22.m) survent un conteur de bordure prédéfini (45), en particulier un conteur de conduit de guidage d'air et / ou un contour de carter.
